**Europäisches Patentamt**

**European Patent Office**

**Office européen des brevets**

(19)

(11) Publication number: **0 112 730**
**B1**

(12) **EUROPEAN PATENT SPECIFICATION**

(45) Date of publication of patent specification: **16.03.88**

(51) Int. Cl.⁴: **H 02 P 8/00**

(21) Application number: **83307946.0**

(22) Date of filing: **23.12.83**

(54) **A stepper motor control system.**

(30) Priority: **24.12.82 JP 234701/82**

(43) Date of publication of application:
**04.07.84 Bulletin 84/27**

(45) Publication of the grant of the patent:
**16.03.88 Bulletin 88/11**

(84) Designated Contracting States:
**DE FR GB IT**

(56) References cited:
**EP-A-0 064 391**
**DE-A-2 625 397**
**DE-A-2 909 842**
**US-A-4 280 084**

**IBM TECHNICAL DISCLOSURE BULLETIN vol.
22, no. 8A, January 1980; G.P. OLSEN "Table
splitting for stepper motor control", page 3052
IBM TECHNICAL DISCLOSURE BULLETIN vol.
22, no. 8B, January 1980; J.A. BARNETT et al.
"Adaptive step motor control circuit", pages
3681, 3682**

(73) Proprietor: **FUJITSU LIMITED**
**1015, Kamikodanaka Nakahara-ku
Kawasaki-shi Kanagawa 211 (JP)**

(72) Inventor: **Sawada, Kenji**
**371-2, Nakanoshima Tama-ku
Kawasaki-shi Kanagawa 214 (JP)**

(74) Representative: **Fane, Christopher Robin King
et al
HASELTINE LAKE & CO. Hazlitt House 28
Southampton Buildings Chancery Lane
London, WC2A 1AT (GB)**

Courier Press, Leamington Spa, England.

## Description

The present invention relates to a stepper motor control system and method. More particularly, it relates to a stepper motor control system and a stepper motor control method for driving a serial printer having a character printing wheel, space mechanism, and hammer mechanism, in which the stepper motor is rotated precisely by a desired amount of movement.

Some prior art in the field of the present invention is listed as follows.

a. Japanese Examined Patent Publication No. 32-8634;

b. Japanese Examined Patent Publication No. 39-27798 (filed August 6, 1963, Published December 3, 1964);

c. British Patent No. 1112335 (filed August 6, 1965, issued May 1, 1968);

d. Fujitsu, August 1968 "F462K/KI disc pack";

e. Japanese Unexamined Patent Publication No. 51-78638 (filed December 23, 1974, open to public July 8, 1976);

f. Computer, September 1975 "IBM Line Printer"; and

g. Sogo Denshi Shuppansha, February 10, 1979.

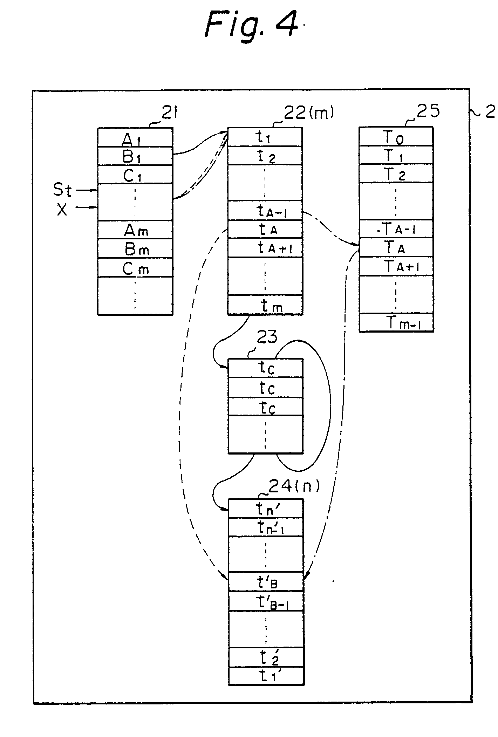

In a conventional stepper motor control system, an acceleration table, a constant-velocity table, and a deceleration table are provided. To energize each phase of the stepper motor step by step, one of the above-mentioned tables is indexed to determine the phase to be energized, to determine the electrical current to be supplied to the phase, and to determine the period for the energized phase, as will be described later in detail with reference to Fig. 4. By this conventional control, the stepper motor can be precisely controlled to be rotated by a desired amount of movement and the rotor stops instantly at the desired target position only when the desired amount of movement is greater than a predetermined value, so that the stepper motor is controlled by the acceleration table during acceleration, by the constant-velocity table during the constant-velocity period, and by the deceleration table during deceleration. This mode of control is referred to as a normal control mode. If, however, the desired amount of movement is smaller than the above-mentioned predetermined value, the constant-velocity table is not used. That is, the stepper motor is controlled at first by a part of the acceleration table and then directly branched, without indexing the constant velocity table, to an intermediate point of the deceleration table. This mode of control is referred to as a jump control mode. In this jump control mode, the rotor of the stepper motor cannot stop instantly at the desired target position, because the acceleration table and the deceleration table are formed to meet the above-mentioned normal control mode, and the jump control mode is not taken into account. That is, in the jump control mode, a part of the acceleration table for the normal control mode is forced to be joined to a part of the deceleration table. The problem of not stopping instantly will be described later in detail with reference to the drawings.

To stop the rotor of the stepper motor instantly when the desired amount of movement is smaller than the predetermined value, an additional acceleration table for providing a relatively small acceleration and an additional deceleration table for providing a relatively small deceleration are conventionally provided to meet the control of the small amount of movement (see Japanese Unexamined Patent Publication No. 51-78638). This countermeasure, however, causes an increase in the hardware and complex control due to the additional acceleration and deceleration tables.

DE—A—2 625 397 discloses a stepper motor control system for a motor drive of an X-ray examination apparatus providing the above normal control mode, that is in which the motor is controlled by an acceleration table during acceleration, by a constant velocity table during the constant-velocity period, and by a deceleration table during deceleration.

DE—A—2 909 842 discloses a stepper motor control system for a print wheel of a serial printer, with look-up tables for acceleration and deceleration data, providing an acceleration phase, constant-velocity phase, and a stepped deceleration phase of the stepper motor.

EP—A—0 064 391 discloses a stepper motor control system for a read/write head of disk drive of a computer system, providing both the above-mentioned normal control mode and also a mode corresponding to the jump control mode in which, when only a short movement is required, the stepper motor is accelerated to less than maximum speed and then immediately decelerated.

According to a first aspect of the present invention, there is provided a control method for rotation of a stepper motor by a desired amount of movement, the stepper motor comprising a rotor and a plurality of phases, and the rotor being coupled to drive a rotatable member, said method including, in the case of said desired amount of movement being larger than a predetermined amount, the steps of:

accelerating a rotation of said stepper motor during an acceleration period by supplying an acceleration pulse sequence to said stepper motor until a rotation speed reaches a predetermined rotation speed,

driving said stepper motor during a constant speed period substantially at a constant speed equal to said predetermined rotation speed; and

decelerating a rotation of said stepper motor during a deceleration period from said predetermined rotation speed by supplying a deceleration pulse sequence to said stepper motor so as to stop said rotation at said desired amount,

characterised in that said method includes, in the case of said desired amount of movement being smaller than said predetermined amount, the steps of:

accelerating the rotation of the stepper motor during an acceleration period by supplying an acceleration pulse sequence to said stepper motor until said rotation speed reaches a given rotation speed dependent upon said desired amount of movement,

controlling the stepper motor during a change point period between acceleration and deceleration in accordance with change point control data, the change point control data indicating a first predetermined energizing period, for energizing a first phase or phases of the stepper motor subsequent to the last energized phase or phases in the acceleration period, and being so determined as to render substantially coincident the speed and the position of said rotor at the end of said change point period with the required speed and position of said rotor at the beginning of a subsequent deceleration period; and

decelerating said rotation of said stepper motor during said deceleration period by supplying a deceleration pulse sequence to said stepper motor.

According to a second aspect of the present invention, there is provided a stepper motor control system for rotating a stepper motor by a desired amount of movement, comprising

a stepper motor having a rotor coupled to a rotatable member for rotating said rotatable member and a plurality of phases, and

a control means, electrically coupled to said stepper motor and operable to supply pulse steps to the stepper motor for accelerating rotation of the stepper motor during an acceleration period, driving the stepper motor at a substantially constant velocity during a constant speed period when applicable, and decelerating rotation of the stepper motor during a deceleration period,

said control means comprising a processor means and storing means for storing control data including control data for the acceleration period and control data for the deceleration period,

characterised in that said control data stored in said storing means further includes change point control data for use in controlling the stepper motor during a change point period and so determined as to render substantially coincident the speed and position of said rotor at the end of the change point period with the required speed and position of said rotor at the beginning of the deceleration period, and in that said processor means is operable to control said stepper motor in accordance with said control data including the change point control data when said desired amount of movement is less than said first predetermined value.

In one embodiment of the present invention, the stepper motor control system comprises a first storing means (ROM$_2$) for storing a plurality of first sets of first control data, each of the first sets including at least a first number of acceleration steps of the stepper motor, a second number of constant-velocity steps of the stepper motor when the desired amount of movement is greater than a first predetermined value, and a third number of deceleration steps of the stepper motor, the first number, the second number, and the third number being corresponding to the desired amount of movement; a second storing means (ROM$_3$) for storing a plurality of second sets of second control data, each of the second sets including at least a first time data indicating an acceleration period for one of the acceleration steps; a third storing means for storing a plurality of third sets of third control data, each of the third sets including at least a second time data indicating a constant-velocity period for one of the constant-velocity steps; a fourth storing means (ROM$_4$) for storing a plurality of fourth sets of fourth control data, each of the fourth sets including at least a third time data indicating a deceleration period for one of the deceleration steps. There is also a control means for controlling the stepper motor in accodance with a selected one of the first sets of the first control data corresponding to the desired amount of movement, the second sets of second control data, the third sets of third control data when the desired amount of movement is greater than the first predetermined value, and the fourth sets of fourth control data.

Each of the first sets further includes a change point control data for controlling the stepper motor during a change point period between the end of the acceleration steps and the beginning of the deceleration steps when the desired amount of movement is smaller than the first predetermined value.

When the desired amount of movement is greater than the first predetermined value, the stepper motor is rotated at first in acceleration by the first number of acceleration steps, then at constant velocity by the second number of constant-velocity steps, and at last in deceleration by the third number of deceleration steps.

When the desired amount of movement is smaller than the first predetermined value, the stepper motor is rotated at first in acceleration by the first number of acceleration steps, then controlled by the change point control data, and at last is rotated in deceleration by the third number of deceleration steps.

Reference is now made, by way of example, to the accompanying drawings, wherein:

Fig. 1 is a graph showing a relationship between the number of steps and the velocity of a stepper motor in conventional stepper motor control systems for illustrating the problems therein;

Fig. 2 is a graph showing a relationship between the time and the distance of a stepper motor in a conventional stepper motor control system for illustrating the problems therein;

Fig. 3A is a block diagram showing a general structure of a stepper motor control system according to the present invention;

Fig. 3B is a perspective view showing a stepper motor in the system shown in Fig. 3A;

Fig. 4 is a block diagram generally showing the constitution of the read-only memory (ROM) included in the block diagram in Fig. 3A, and showing general process flows in both the conventional way and according to the present invention;

Fig. 5 is a graph generally showing a relationship between the number of steps and the velocity of a stepper motor in the stepper motor control system shown in Fig. 3A;

Fig. 6 is a general flow chart showing the general process flow in the stepper motor control system in Fig. 3A;

Fig. 7A is a graph showing energized phases of a stepper motor in the process flow in Fig. 6, according to an embodiment of the present invention;

Fig. 7B is a graph explaining a change point control according to another embodiment of the present invention;

Fig. 8 is a schematic system and process flow diagram showing a detailed process flow of a stepper motor control system, according to an embodiment of the present invention;

Fig. 9 is a table showing the contents in the $ROM_2$ shown in Fig. 8;

Fig. 10 is a table showing the contents in the $ROM_3$ shown in Fig. 8;

Fig. 11 is a table showing the contents in the $ROM_4$ shown in Fig. 8;

Fig. 12A is a detailed flow chart showing a process of the extraction of control data in the process shown in Fig. 8;

Fig. 12B is a detailed flow chart showing a process of start control in the process shown in Fig. 8;

Fig. 12C is a detailed flow chart showing an acceleration control process in the process shown in Fig. 8;

Fig. 12D is a detailed flow chart showing a first part of a change point control in the process shown in Fig. 8;

Fig. 12E is a detailed flow chart showing a second part of a change point control in the process shown in Fig. 8;

Fig. 12F is a detailed flow chart showing a deceleration control process in the process shown in Fig. 8;

Fig. 13 is a circuit diagram showing a driver circuit of the stepper motor control system according to an embodiment of the present invention;

Fig. 14 is a graph showing phases to be energized, and explaining fine control near the target position; and

Fig. 15 is a graph showing a relationship between acceleration force or deceleration force and the time, explaining fine-control near the target position.

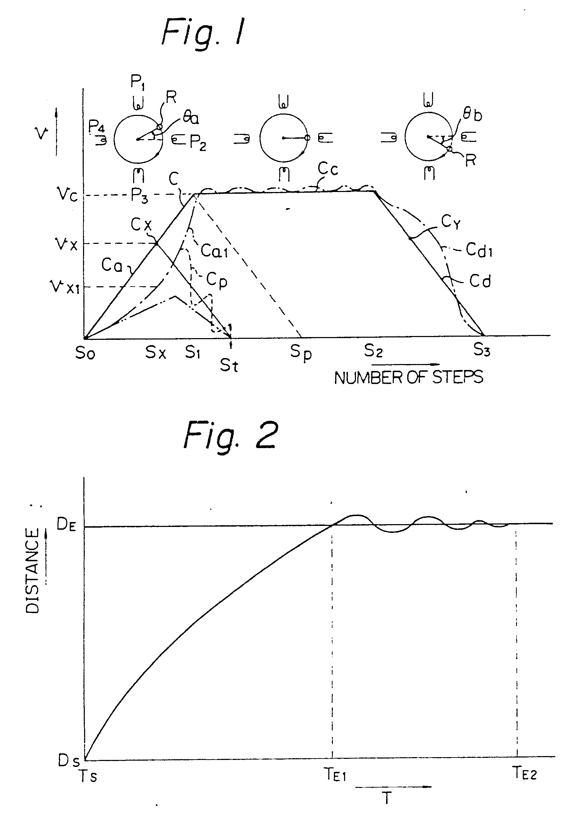

Before describing the embodiments of the present invention, conventional problems will first be described with reference to Figs. 1 and 2.

Figure 1 is a graph showing a relationship between the number of steps and the velocity of a stepper motor in a conventional stepper motor control system. In Fig. 1, a trapezoid solid curve C expresses a theoretical locus of a normal control mode of operation when the desired number of steps is greater than a predetermined value $S_p$.

The curve C consists of an acceleration curve $C_a$ between a number of the steps $S_0$ and a number of steps $S_1$, a constant-velocity curve $C_c$ between step numbers $S_1$ and $S_2$, and a deceleration curve $C_d$ between step numbers $S_2$ and $S_3$. The gradients of the acceleration curve $C_a$ and the deceleration curve $C_d$ are constant, regardless of the number of steps, and are determined theoretically or experimentally when the number of steps is greater than the predetermined number $S_p$. When a desired number of steps is greater than the predetermined value $S_p$, the normal control mode of operation is carried out by using the full length of the acceleration curve $C_a$, the necessary steps of the constant-velocity curve $C_c$, and the full length of the deceleration curve $C_d$. When a desired number of steps $S_t$ is smaller than the predetermined value $S_p$, the constant-velocity curve is not used, and an intermediate point $C_X$ on the acceleration curve $C_a$ is directly joined to an intermediate point $C_Y$ of the deceleration curve $C_d$. Thus the stepper motor starts from a start point expressed by a step number $S_0$ to reach the target position expressed by the step number $S_t$, under the jump control mode.

The problems existing in the conventional jump control mode will now be described in detail. In Fig. 1, a rotor R and four coils $P_1$ through $P_4$ for rotating the rotor R are shown. The four coils correspond to four phases of energizing current, respectively. That is, in a simple example, the rotor R is rotated by energizing the coils $P_1$ through $P_4$ step by step. During acceleration, the rotor R is so accelerated that after it has rotated by the step number $S_1$, it has a constant velocity $v_c$. Therefore, in an intermediate part of the acceleration period between the step numbers $S_0$ and $S_1$, the rotor R is slightly delayed from the position corresponding to the energized coil, for example, $P_2$ by a variable angle $\theta_a$, as illustrated in the figure. This means that a practical locus of the acceleration is different from the theoretical locus curve C. The practical locus of acceleration is expressed by a dash-dot curve $C_{a1}$. As can be seen from the practical acceleration curve $C_{a1}$ and the theoretical curve $C_a$, in an intermediate part of the acceleration period between the step numbers $S_0$ and $S_1$, the practical velocity of the rotor R is smaller than the theoretical velocity of the rotor R, for the same step number.

The above-described principle of the difference between the theoretical curve and the practical curve can be similarly applied to the deceleration period between the step numbers $S_2$ and $S_3$. That is, during deceleration, the rotor R is so decelerated that after it has rotated by the step number $S_3$, which is greater than the predetermined value $S_p$, the rotor R stops instantly. Therefore, in an intermediate part of the deceleration period between the step numbers $S_2$ and $S_3$, except for a vicinity of the target stop position corresponding to the step number $S_3$, the rotor R is slightly forward of the position corresponding to the energized coil, for example, $P_2$ by a variable angle $\theta_b$, as illustrated in the figure. In the vicinity of the

step number $S_3$, the rotor R is again delayed to stop instantly at the target position. The practical locus of deceleration is expressed by a dash-dot curve $C_{d1}$.

During the constant-velocity period between the step numbers $S_1$ and $S_2$, the practical curve is substantially the same as the theoretical curve.

When the desired step number to rotate the rotor so as to move a load to a target position is smaller than the predetermined value $S_p$, which determines the gradients of the acceleration curve $C_a$ and the deceleration curve $C_d$, the stepper motor is controlled by the jump control mode. Assuming that the desired step number is $S_t$, then the acceleration control must be directly joined to the deceleration control at a step number $S_x$. At the step number $S_x$, the practical velocity $V_{x1}$ is smaller than the theoretical velocity $V_x$ because of the above described factors. Therefore, at a change point between acceleration and deceleration, the rotor R is at first accelerated by a remaining acceleration force and then suddenly decelerated. This sudden deceleration provides a damping force to the rotor R. As a result, during the deceleration period between the step numbers $S_x$ and $S_1$, the practical curve repeats acceleration and deceleration, as illustrated in Fig. 1 by a broken curve $C_p$, and, at the target step number $S_t$, the rotor R does not stop instantly but gradually stops with an oscillation between acceleration and deceleration.

This gradual stop motion will be more apparent with reference to Fig. 2, in which the ordinate represents the distance of a load moved by the stepper motor, and the abscissa represents time. At a time $T_s$, the load is positioned at a start point $D_s$. At a time $T_{E1}$, the load reaches a target position $D_E$. However, the load does not stop at the time $T_{E1}$ and continues until a time $T_{E2}$ comes after several oscillations.

To stop the rotor instantly at the step number $S_t$, another acceleration curve $C_{a2}$ having a smaller gradient with respect to the acceleration curve $C_a$, and another deceleration curve $C_{d2}$ having a smaller gradient with respect to the deceleration curve $C_d$, are conventionally employed (Japanese Unexamined Patent Publication No. 51-78638). These additional curves, however, cause an increase in the hardware and a complex control.

An embodiment of the present invention can remove the above-mentioned problems in the stoppage of the rotor of stepper motor.

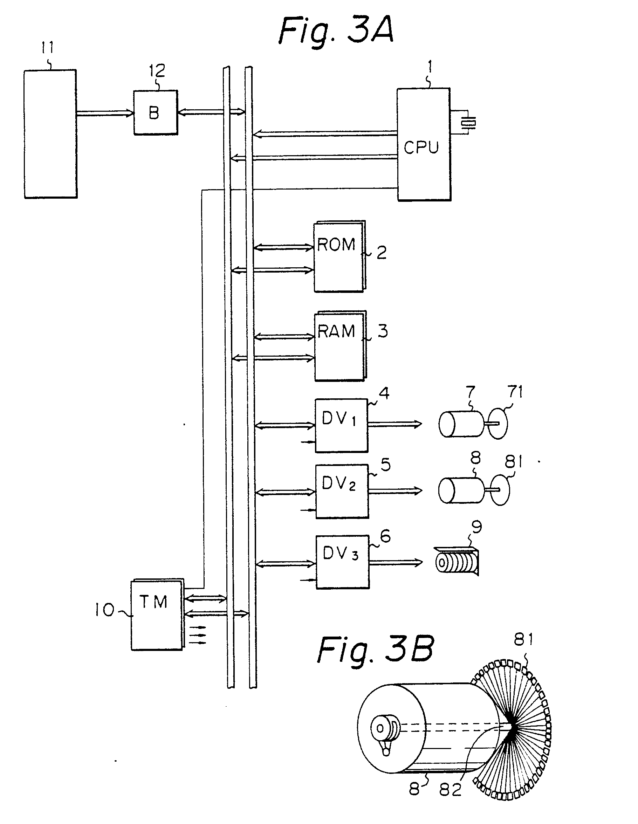

Figure 3A illustrates a general structure of a stepper motor control system, adapted to drive a serial printer, embodying the present invention. In Fig. 3A, reference numeral 1 is a central processing unit (CPU), 2 a read only memory (ROM) for storing an acceleration table, a deceleration table, a control table, and a change point control table, which is provided according to this embodiment, 3 a random access memory (RAM) for storing part of the data read from the ROM 1, 4, 5, and 6 are respectively driver circuits ($DV_1$, $DV_2$, and $DV_3$), 7, 8, and 9 are a stepper motor for driving a space mechanism 71, a stepper motor for driving a print wheel 81, and a hammer driver, respectively, 10 a timer (TM) for determining a period of each step of rotation of the stepper motors 7 and 8 or each step of the control of the hammer driver 9, 11 an interface circuit, and 12 an input buffer circuit (B).

Figure 3B shows an expanded perspective view of the stepper motor 8 and the print wheel 81 in the system in Fig. 3A. As shown in Fig. 3B, the print wheel 81 is fixed to a rotating axle 82 of the stepper motor 8. The rotating axle 82 is fixed to a rotor (not shown in Fig. 3B) in the stepper motor 8. The print wheel 81 has a number of characters fixedly mounted on its circular periphery. Usually, the number of characters is 96 or 192. Therefore, to move the designated character to the place where the hammer is placed, a maximum 192 steps of rotation are necessary. In practice, however, by rotating the rotor in the clockwise direction or in the counterclockwise direction, only a maximum 96 steps are required.

The stepper motor 7 and the space mechanism 71 have a structure similar to the stepper motor 8 and the print wheel 81, except that the stepper motor 7 is driven with a far greater number of steps for one rotation than the stepper motor 8.

A general constitution of the ROM2 is shown in Fig. 4. In Fig. 4, the ROM includes a control table 21, an acceleration table 22 having m addresses, a constant-velocity table 23, a deceleration table 24 having n addresses, and a change point control table 25.

The control table 21 stores, at least, numbers of acceleration steps $A_1$, $A_2$, ..., and $A_m$ and numbers of deceleration steps $B_1$, $B_2$, ..., and $B_n$ in its respective addresses. The control table 21 further includes change point control data $C_1$, $C_2$, ..., and $C_{m-1}$ for determining an address of the change point control table 25. When a desired number of steps X to move a load to a target position is designated, the necessary number of acceleration steps, the necessary address in the change point control table 25 or the necessary number of constant-velocity steps, and the necessary number of deceleration steps, are determined by the control table 21.

The acceleration table 22 stores, at least, time data $t_1$, $t_2$, $t_3$, ..., and $t_m$ in its respective addresses 1 through m. Suppose that the stepper motor, for example, 8, has four phases A, B, C, and D which are sequentially energized in a one phase energization, i.e., in such a way as A, B, C, D, A, B, ... . Then, the time data $t_1$ in the first address represents a period during which the phase A is energized; the time data $t_2$ in the second address represents a period during which the phase B is energized; and so on. The time data $t_1$, $t_2$, $t_3$, ... are so determined that the rotor of the stepper motor 8, for example, is gradually accelerated along the practical acceleration curve $C_{a1}$ (Fig. 1).

The constant-velocity table 23 stores, at least, the same time data $t_c$ in respective addresses so that the rotor is rotated with a constant velocity $v_c$ (Fig. 1).

The deceleration table 24 stores, at least, time data $t'_n$, $t'_{n-1}$, ..., and $t'_1$ in its respective addresses 1 through n. Each of the time data $t'_n$, $t'_{n-1}$, ..., and $t'_1$ represents a period during which a corresponding phase A, B, C, or D is energized. The time data $t'_n$, $t'_{n-1}$, ..., and $t'_1$ are so determined that the rotor of the stepper motor 8, for example, is gradually decelerated along the practical deceleration curve $C_{d1}$ (Fig. 1).

When the desired number of steps X, to move a load of a rotatable member such as the printer wheel 81 to a target position, is greater than m+n, normal control mode of operation is carried out. In this case, the data of the acceleration table 22 are sequentially indexed to provide the time data $t_1$, $t_2$, ..., and $t_m$, sequentially, then a necessary number of addresses in the constant-velocity table 23 are indexed to provide the necessary number of the time data $t_c$, and finally, the data of the deceleration table 24 are sequentially indexed to provide the time data $t'_n$, $t'_{n-1}$, ..., and $t'_1$, sequentially. This process is substantially the same as in the conventional process. No problem occurs in the normal control mode of operation except for in the vicinity of the target position in the deceleration, as later described in detail.

In a jump control mode, a conventional process is illustrated in Fig. 4 by broken lines. That is, conventionally, when a desired number of steps $S_t$, which is smaller than m+n, is designated, a number of acceleration steps A which is smaller than m and a number of deceleration steps B which is smaller than n are read from the control table 21. The read number A indicates that the acceleration table 22 must be indexed so as to read out sequentially the time data $t_1$, $t_2$, ..., $t_{A-1}$, and $t_A$. The read number B indicates that the deceleration table 24 must be indexed so as to read out sequentially the time data $t'_B$, $t'_{B-1}$, ..., $t'_2$, and $t'_1$. The constant-velocity table 23 is not indexed in the jump control mode. That is, in the conventional jump control mode, the control is carried out by using a part of the acceleration table 22 and a part of the deceleration table 24. This causes the problem of not stopping instantly as previously described with reference to Figs. 1 and 2.

In the present invention, the change point control table 25 is used in the jump control mode. In Fig. 4, the process of the jump control mode is illustrated by dash-dot lines. When the desired number of steps $S_t$ is designated, the acceleration table 22 is indexed to read the time data $t_1$, $t_2$, ..., and $t_{A-1}$. Then, the change point control table 25 is indexed to read a time data $T_A$.

The change point control table 25 stores, at least, time data $T_0$, $T_1$, $T_2$, ..., $T_{A-1}$, $T_A$, $T_{A+1}$, ..., and $T_{m-1}$. The time data $T_A$ indicates a time period between the acceleration and the deceleration and is used for change point control in place of the time data $t_A$ in the acceleration table 22, when the jump control mode of operation is carried out.

After the time data $T_A$ in the change point control table 25 is read, the deceleration table 24 is indexed to read the time data $t'_B$, $t'_{B-1}$, ..., and $t'_1$.

During the period indicated by the time data $T_A$, a substantially constant-velocity of operation is carried out so that the period functions as a buffer between the acceleration and the deceleration. A deenergized operation may alternatively be carried out during a part of the period determined by the time data $T_A$, as later described in detail.

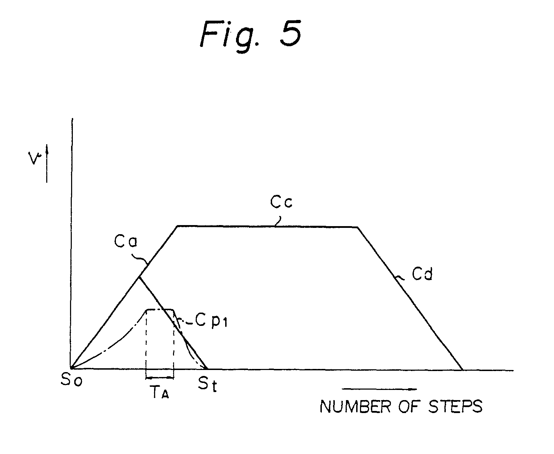

Figure 5 illustrates a practical curve $C_{p1}$ of the jump control mode according to the present invention. As shown in Fig. 5, since the time data $T_A$ is introduced between the acceleration and the deceleration, the conventional problems are eliminated. That is, during the period between the acceleration and the deceleration, the remaining acceleration and the sudden deceleration as in the conventional jump control mode do not appear in the practical curve $C_{p1}$.

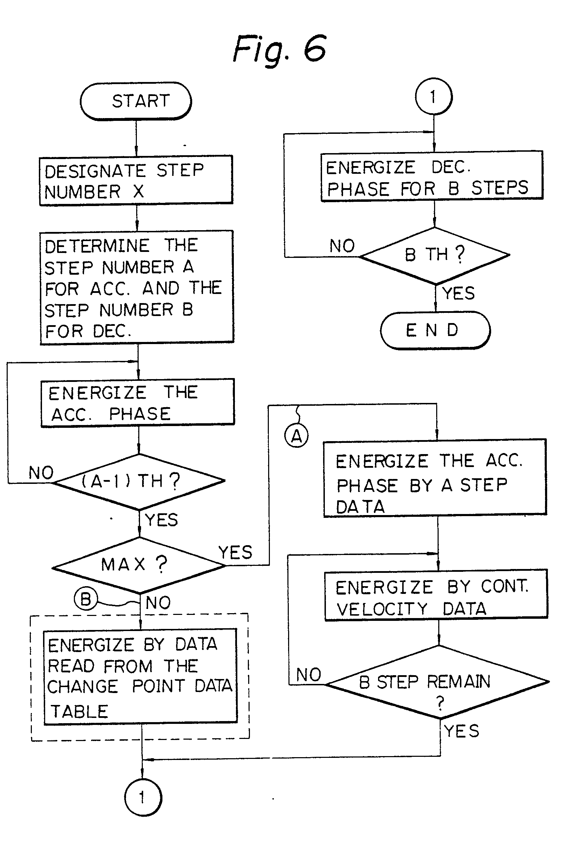

Figure 6 is a general flow chart showing the process flow in the stepper motor control system in Fig. 3. As shown in Fig. 6, when a desired step number X is designated, the acceleration step number A and the deceleration step number B are determined. Then, (A−1) acceleration steps are energized. When the step number A is the maximum step number in the acceleration table 22 (Fig. 4), the process proceeds to a route Ⓐ which is the normal control mode of operation. When the step number A is not the maximum step number in the acceleration table 22, the process proceeds to a route Ⓑ which is the jump control mode of operation according to the present invention. In the jump control mode of operation, a phase subsequent to the phase energized in the (A−1)th step is energized by using data read from the change point control table 25 (Fig. 4). After this, B steps of deceleration are carried out.

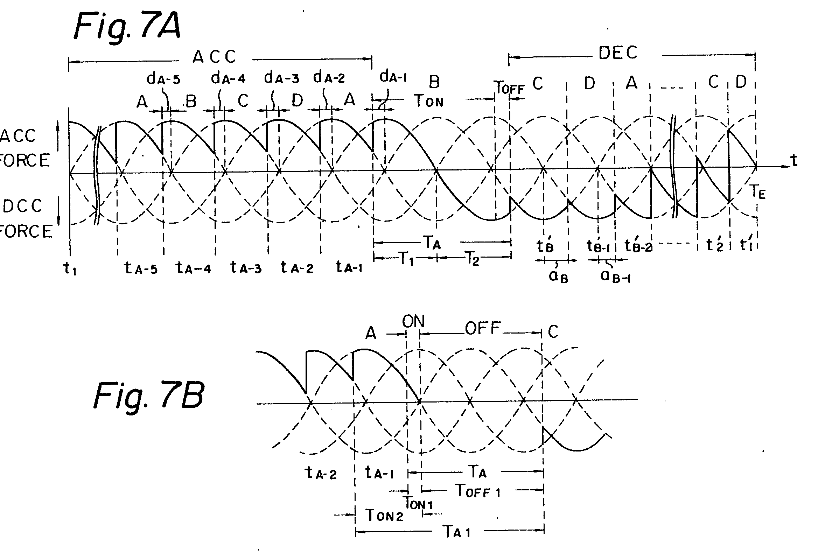

Figure 7A is a graph showing energized phases of a stepper motor in the process flow in Fig. 6 when the jump control mode of operation is carried out.

In Fig. 7A, the acceleration period ACC, the change point control period $T_A$, and the deceleration period DEC are shown.

In the acceleration period ACC and the deceleration period DEC, the four phases A, B, C, and D are cyclically energized. In the acceleration period ACC, each phase is positively energized so as to generate an acceleration force. In the deceleration period DEC, each phase, except for several phases energized in the vicinity of a time $T_E$ at which the rotor of the stepper motor stops its rotation, is negatively energized so as to generate a deceleration force. Each phase in the acceleration period ACC starts to be energized earlier by a delay time $d_1$, $d_2$, ..., $d_{A-2}$, or $d_{A-1}$, than the zero cross point of the sine curves. This means that, in the intermediate part of the acceleration period ACC, the rotor R is slightly delayed by the delay time $d_1$, $d_2$, ..., $d_{A-2}$, or $d_{A-1}$ from the position corresponding to the energized coil, as described before with reference to Fig. 1. Each phase in the deceleration period DEC starts to be energized later by an advance time $a_1$, $a_2$, ..., $a_{B-1}$, or $a_B$. This means that, in the intermediate part of the deceleration period DEC, the rotor R is slightly advanced by the advance time $a_1$, $a_2$, ..., or $a_B$ from the position

corresponding to the energized coil.

During the change point control (CPC) period $T_A$, the acceleration state is changed to the deceleration state. This change is carried out by energizing a phase, subsequent to the phase finally energized in the acceleration period ACC, for example, for an appropriate period $T_A$, for example. The period $T_A$ is theoretically or experimentally determined so as to smoothly join the acceleration state with the deceleration state.

In Fig. 7A, the finally energized phase in the acceleration period ACC is the phase A. Therefore, the phase B subsequent to the phase A is energized in the change point control period $T_A$. During the first half of the period $T_A$, i.e., during a period $T_1$, an acceleration energy is applied to the rotor of the stepper motor. During the last half of the period $T_A$, i.e., during a period $T_2$, a deceleration energy is applied to the rotor. The period $T_A$ is so determined as to compensate the acceleration energy with the deceleration energy or the deceleration energy plus the friction energy consumed in the stepper motor during the change point period. After the change point control period $T_A$, a phase subsequent to the phase energized in the change point control period $T_A$ is first energized, and then phases A, B, C, and D are cyclically energized.

Thus, the conventional problem of sudden deceleration or oscillation at the change point between the acceleration and the deceleration or during the deceleration is substantially eliminated, as can be seen from Fig. 7A.

In one embodiment, the current supplied to the phase B during the change point control period $T_A$ is substantially constant, so that the rotor of the stepper motor is rotated at a substantially constant velocity.

To smothly join the acceleration state with the deceleration state, it is desirable that the speed and the position of the rotor at the end of the change point control period $T_A$ coincide, as far as possible, with the predetermined or necessary speed and the predetermined or necessary position at the beginning of the deceleration period determined by the table 24 (Fig. 4). In practice, however, there are problems in achieving the above coincidence. First, the speed and the position of the rotor at the end of the final acceleration period $t_{A-1}$ do not always coincide with those required at the beginning of the first deceleration period $t'_B$. Second, the rotor generally receives friction force during the change point control period $T_A$, so that the speed of the rotor is lowered due to the friction force. Therefore, even when the period $T_A$ is determined to compensate the acceleration energy with the deceleration energy, the speed and the position of the rotor at the end of the change point control period $T_A$ do not always precisely coincide with the predetermined speed and position.

In order to decrease the disadvantage due to the above-mentioned problems, in another embodiment of the present invention, different currents may be alternatively supplied to the phase B during the change point control period $T_A$. Preferably, the period $T_A$ consists of an ON period $T_{ON}$ and an OFF period $T_{OFF}$, as illustrated in Fig. 7A. During the ON period $T_{ON}$, a predetermined current is supplied to the phase B. During the OFF period $T_{OFF}$, no current is supplied to any one of the phases A, B, C, and D, that is, all phases are deenergized. The OFF period $T_{OFF}$ is properly determined theoretically or experimentally so as to achieve, as far as possible, coincidence of the position hand the speed at the end of the period $T_A$ with the position and the speed at the beginning of the period $t'_B$.

For example, if the friction force is considerably large and a considerable friction energy is consumed during the period $T_A$, the OFF period is taken as considerably long, so that the deceleration period in the CPC period $T_A$ is limited. Also, if the speed at the end of the period $T_{A-1}$ is lower than the speed at the beginning of the period $t'_B$, a long OFF period is taken in the CPC period $T_A$. For example, the OFF period may be longer than a quarter of one cycle of the sine curve.

Figure 7B illustrates still another embodiment in the control during the change point control period $T_A$. In this embodiment, the change point control period $T_A$ consists of a short ON period $T_{ON1}$ and a long OFF period $T_{OFF1}$. During the short ON period $T_{ON1}$, the phase A energized in the last period $t_{A-1}$ of the acceleration period ACC is continued to be energized until the sine curve of the phase A reaches a zero cross point. During the long OFF period $T_{OFF1}$, all phases are deenergized. Thus, in this embodiment, only acceleration is carried out during the short ON period $T_{ON1}$, and deceleration is not carried out during the change point control period $T_A$. The acceleration energy, generated during the short ON period $T_{ON1}$ as illustrated by slashes in Fig. 7B, is compensated with friction energy during the period $T_A$. Accordingly, the embodiment in Fig. 7B is most preferably applied when the speed of the rotor at the end of the period $t_{A-1}$ is equal to the required speed at the beginning of the period $t'_B$.

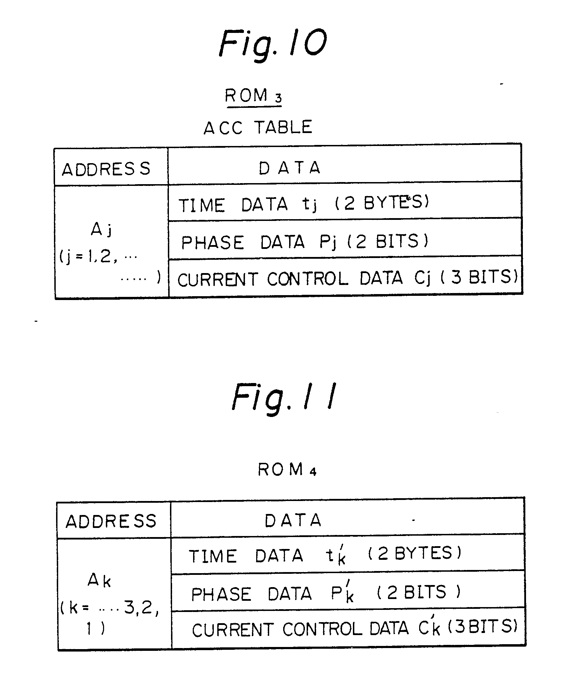

In place of energizing the phase A during the short ON period $T_{ON1}$, the subsequent phase B may be energized. However, when the period $T_{ON1}$ is very short, so that the CPU1 (Fig. 3) cannot control the time period $T_{ON1}$, it is preferable to energize the same phase as the phase A energized in the last period $t_{A-1}$ of the acceleration period, and an ON period $T_{ON2}$, i.e., the short period $T_{ON1}$ plus the last period $t_{A-1}$, is set in the timer 10 (Fig. 10). Accordingly, in the embodiment in Fig. 7B, the change point control table 25 must store the time data $T_{ON2}$ and the time data $T_{OFF1}$ instead of the time data $T_A$, and the change point control is carried out after the (A−2)th step of the acceleration.

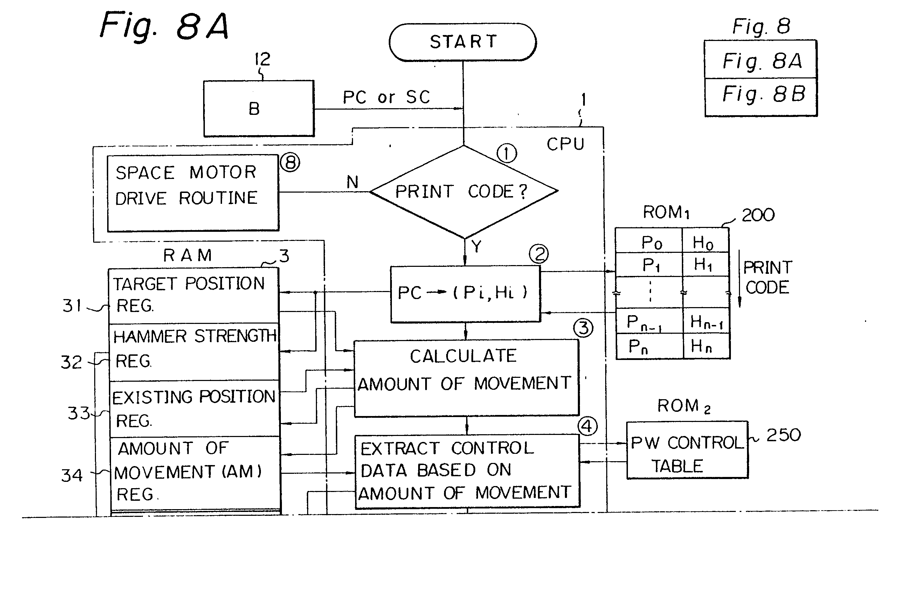

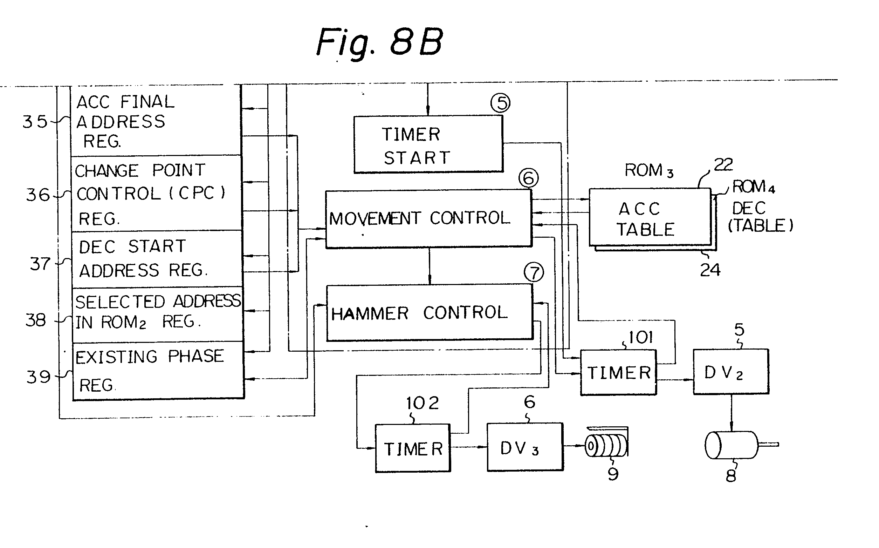

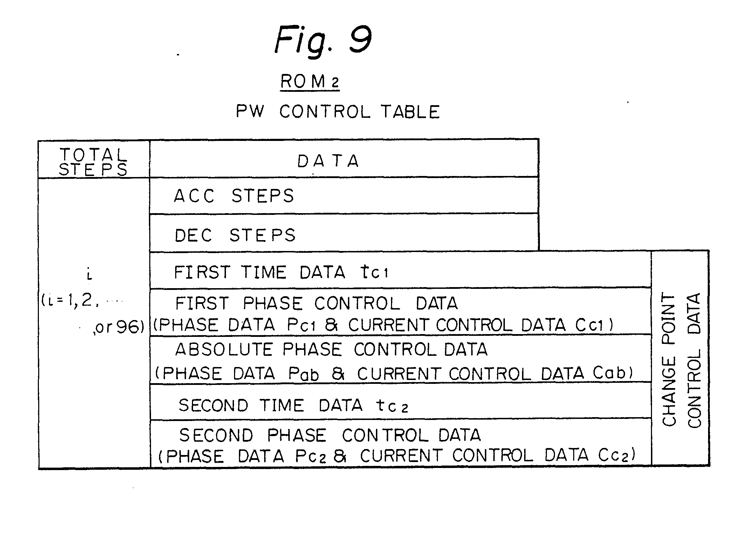

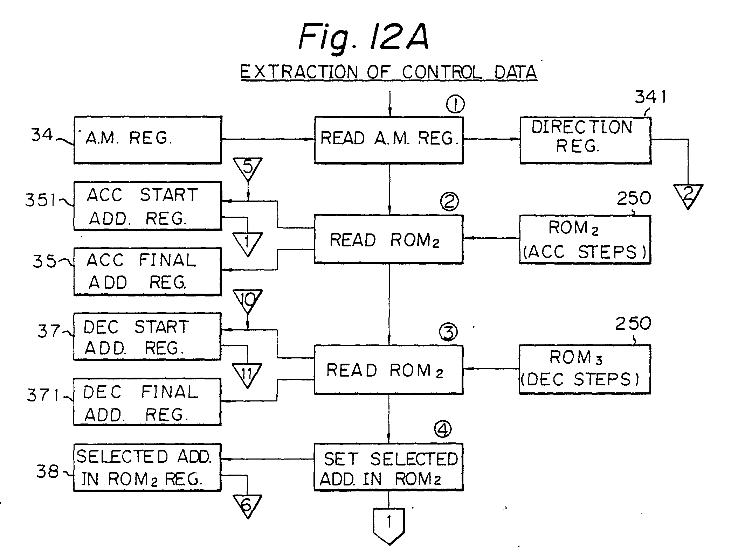

Figure 8 shows a schematic system and process flow of a stepper motor control system according to an embodiment of the present invention. Although in Fig. 8 the system is illustrated in more detail than in the block diagrams in Figs. 3 and 4, the same reference numerals used in Figs. 3 and 4, indicate the same parts. The system shown in Fig. 8 includes, as hardware, the CPU 1; a ROM 200 (ROM$_1$), which stores position codes P$_0$, P$_1$, ..., and P$_n$, of the characters and hammer strength codes H$_0$, H$_1$, ..., and H$_n$ corresponding to the position codes; a ROM 250 (ROM$_2$), which stores a print wheel control table shown in Fig. 9; the acceleration table 22 (ROM$_3$) shown in Fig. 4 and in more detail in Fig. 10; the deceleration table 24 (ROM$_4$) shown in Fig. 4 and in more detail in Fig. 11; the RAM 3, which includes a target position register 31, a hammer strength register 32, an existing position register 33, an amount of movement (AM) register 34, an acceleration final address register 35, a change point control data (CPC) register 36, a deceleration start address register 37, a selected address in ROM$_2$ register 38, and an existing phase register 39; timers 101 and 102; the drivers 5 and 6; the stepper motor 8 for driving a print wheel (not shown); the hammer driver 9; and the input buffer circuit 12.

In Fig. 8, only a print wheel driving system is mainly shown. In practice, however, a space mechanism driving system, which is substantially the same as the print wheel driving system, and other driving systems such as carriage return control system are also included in the stepper motor control system in Fig. 8.

In the block of the CPU 1, various processing steps 1 through 8 are illustrated.

The stepper motor control system in Fig. 8 operates as follows.

When a print code or a space code is input into the input buffer circuit 12, the step 1 determines whether the input code is a space code or the print code. If the input code is a space code SC, a space motor drive routine 8 is carried out. If the input code is a print code PC expressing a desired character to be printed, the step 2 accesses the ROM$_1$ by using the print code as an address, so as to read a position code P$_i$ and the corresponding hammer strength code H$_i$, and stores them into the target position register 31 and the hammer strength register 32. Then, the step 3 calculates the amount of movement of the print wheel (not shown) by subtracting the contents in the target position register 31 from the contents in the existing position register 33, which is storing the existing position of the print wheel, or the starting position of the print wheel. The calculated amount of movement, which corresponds to the desired number of steps of the stepper motor 8, is stored in the AM register 34. After the calculation, the existing position register 33 is updated by the contents in the target position register.

Then, in the step 4, based on the contents in the AM register 34, the ROM$_2$ is accessed by using the desired number of steps as an accessing address i so as to read control data such as the necessary number of acceleration steps (ACC steps), the necessary number of deceleration steps, and the change point control data (see Fig. 9). The accessing address i is stored in the selected address in ROM$_2$ register 38. The read number of the acceleration steps is stored in the acceleration final address register 35. The stored number of the acceleration steps indicates the final address for accessing the ROM$_3$. The read number of the deceleration steps is stored in the deceleration start address register 37. The stored number of the deceleration steps indicates the start address for accessing the ROM$_4$. The read change point control (CPC) data is stored in the CPC register 36.

In the step 5, the timer 101 is started.

In the step 6, movement control for driving the stepper motor 8 is carried out. That is, the time data for each step of acceleration is at first read from the ROM$_3$ step by step. Each time data is set in the timer 101. During each period set by the time data, the driver 5 drives the stepper motor 8 so as to energize a specified phase with a specified electric current. The method for determining the phase to be energized and the current to be supplied to the phase will be described later in detail. After the final step of acceleration, the CPU 1 reads the contents stored in the change point control data register 36. Then, the time data in the CPC data is set in the timer 101. During the period set by the time data in the CPC register 36, the driver 5 drives the stepper motor 8 so as to carry out the change point control. In the change point control, the phase to be energized and the current to be supplied to the phase are determined by the change point control data, as later described in detail. After the change point control, the time data for each step of deceleration is read from the ROM$_4$ step by step. Each time data is set in the timer 101, and the deceleration control is carried out in a similar way to the acceleration control. Thus, the rotor of stepper motor 8 rotates by the desired number of steps, and stops at the target position.

After the rotor stops, a hammer control process 7 is carried out by reading the contents stored in the hammer strength register 32. Based on the hammer strength data, a corresponding time data is set in the timer 101. Then, the driver circuit 6 drives the hammer driver 9 so that the designated character is printed with an appropriate strength.

Figure 9 shows the contents in the ROM$_2$ in the system in Fig. 8. In Fig. 9, the ROM$_2$ has a print wheel control table. In the table i is an address of the ROM$_2$. The maximum address is equal to the number of steps of the rotor for a half rotation. This is because, the movement of the designated character mounted on the print wheel to the target position can be carried out by rotating the rotor within a half rotation even when the desired amount of movement is greater than the steps required for a half rotation of the rotor. That is, if the desired amount of movement is equal to or smaller than the steps required for a half rotation of the rotor, the rotor is rotated in the clockwise direction. If the desired amount of movement is greater than the steps required for a half rotation of the rotor, the rotor is rotated in the counterclockwise direction.

The print wheel 81 (Fig. 3B) rotates by one rotation with 192 steps in this example. Therefore, the maximum address in the ROM$_2$ is 96 in this example. The address i corresponds to the desired number of steps S, or, in other words, the total steps. When the desired number of steps S is equal to or smaller than 96, i=S. When the desired number of steps S is greater than 96, i=192−S.

In each address i, the number of acceleration steps, the number of deceleration steps, and change point control data are stored. The change point control data includes a first time data $t_{c1}$ for determing the ON period $T_{ON}$ (Fig. 7A) in the change point control period, a first phase control data, an absolute phase control data, a second time data $t_{c2}$ for determining the OFF period $T_{OFF}$ for example, and a second phase control data.

The first phase control data consists of a first phase data $P_{c1}$ and a first current control data $C_{c1}$. The first phase data $P_{c1}$ includes a parameter for determining the phase data to be stored in the existing phase register 39 (Fig. 8). The first current control data $C_{c1}$ includes a parameter for determining the electric current to be supplied to the phase. The phase data for specifying the existing phase being energized is stored in the existing phase register 39.

The absolute phase control data consists of an absolute phase data $P_{ab}$ and an absolute current control data $C_{ab}$. The absolute phase data $P_{ab}$ absolutely determines the phases deenergized during the OFF period $T_{OFF}$ (Fig. 7A) regardless of the existing phase energized before the OFF period $T_{OFF}$. The absolute current control data $C_{ab}$ absolutely determines not to supply current to all phases during the OFF period $T_{OFF}$.

The second control data consists of a second phase data $P_{c2}$ and a second current control data $C_{c2}$. The second phase data $P_{c2}$ includes a parameter for determining the phase to be energized immediately after the OFF period $T_{OFF}$. The second current control data $C_{c2}$ includes a parameter for determining the electric current to be supplied to the phase which is energized immediately after the OFF period $T_{OFF}$.

Figure 10 illustrates the contents of the $ROM_3$ in the system in Fig. 8. The $ROM_3$ has an acceleration table. The acceleration table includes a number of addresses $A_j$ (j=1, 2, ...). In each address $A_j$, an acceleration time data $t_j$ which indicates an acceleration period for one of the acceleration steps, an acceleration phase data $P_j$ including a parameter to determine the phase to be energized in the next step after the existing phase is energized, and an acceleration current control data $C_j$ including a parameter to determine the current to be supplied to the phase in the next step.

Figure 11 illustrates the contents of the $ROM_4$ in the system in Fig. 8. The $ROM_4$ has a deceleration table including a number of addresses $A_k$ (k=...3, 2, 1). in each address $A_k$ is a time data $t'_k$, a phase data $P'_k$, and a current control data $C'_k$. The function of these data is similar to that of the data in the acceleration table.

In the one-phase energization, that is, when the phases A, B, C, and D are cyclically energized by a constant electric current, the phase data in each of the print wheel control table, the acceleration table, and the deceleration table merely has a parameter to advance the existing phase from A to B, from B to C, from C to D, or from D to A, and the current control data in each table is not necessary. The above-mentioned 1—2 phase energization, however, is only one example of operation.

In practice, two-phase energization is more widely carried out. In the two-phase energization, two phases are simultaneously energized for each step. Further, in the vicinity of the target position, that is, in several steps at the end of the deceleration period, a fine control of the rotation of the rotor is carried out. This two-phase energization and the fine control of the rotation will be described later in more detail with reference to the figures.

In such a two-phase energization or a fine control, the above-mentioned phase data and current control data effectively determine the next phase or phases to be energized, and the current to be supplied to the phase or phases. This will also be described later in detail.

Regarding the process flow shown in Fig. 8, a more detailed process flow will now be described with reference to Figs. 12A through 12F.

Figure 12A shows a detailed process flow of the extraction of control data executed in the step 4 in the process flow in Fig. 8. In Fig. 12A, it is assumed that the desired amount of movement, i.e., the total number of necessary steps, is already stored in the amount of movement (A.M.) register 34. In the first step 1 the contents of the A.M. register 34 are read to determine the direction of rotation of the print wheel 81. If the total number of steps is equal to or smaller than 96, a logic "0", for example, is stored in a direction register 341. If the total number of steps is greater than 96, a logic "1" is stored in the direction register 341. In the second step 2, the number of acceleration steps is read from the $ROM_2$ to set the start address of the acceleration, usually the number 1, into an acceleration start address register 351, and to set the final address of the acceleration into the acceleration final address register 35. In the third step 3, the number of deceleration steps is read from the $ROM_2$ to set the start address of the deceleration into the deceleration start address register 37, and to set the final address of the deceleration, usually the number 1, into a deceleration final address register 371. In the fourth step 4, the selected address i for accessing the $ROM_2$ is stored in the selected address in $ROM_2$ register 38. Thus, the extraction of control data is completed.

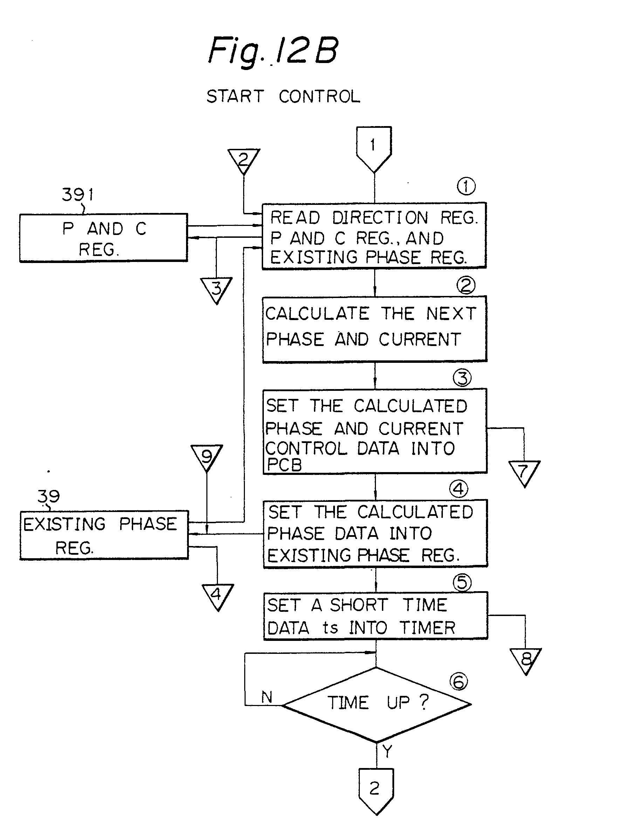

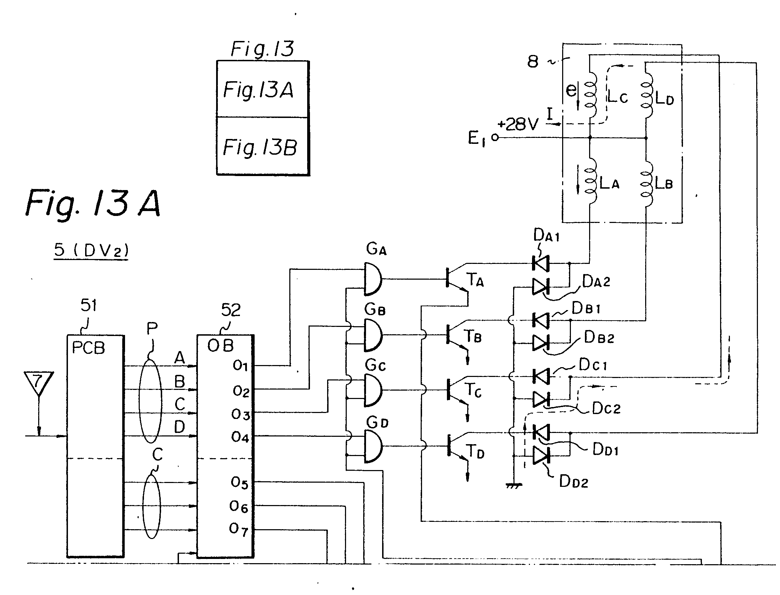

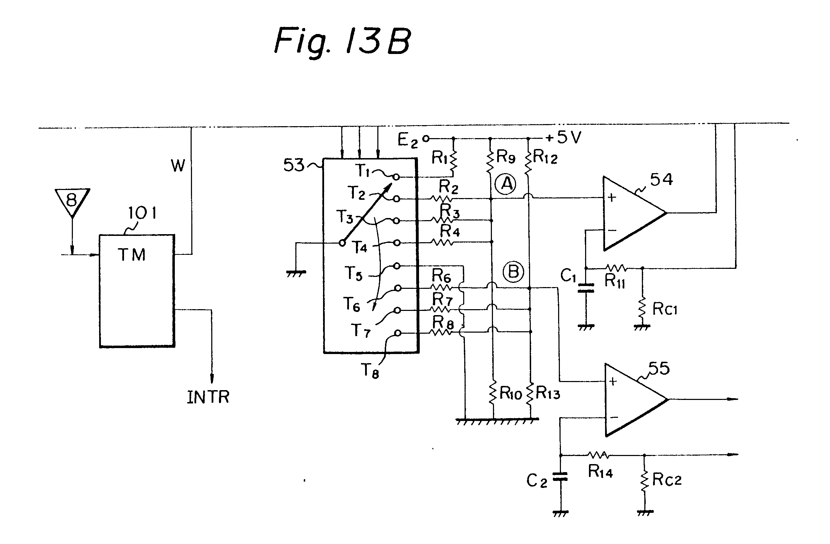

Figure 12B shows a detailed process flow of start control executed in a part of the step 6 in the process flow in Fig. 8. In Fig. 12B, in the first step 1, the contents in the direction register 341 (Fig. 12A), in a P and C register 391, and in the existing phase register 39 are read. The P and C register 391 stores a phase data and a current control data, and, at this stage, stores those used in the final step in the previous process of the print wheel drive. In the second step 2, based on the read data, the first phase to be energized and the electric current to be supplied to the first phase are calculated. In the one-phase energization, the next phase to be energized is calculated by simply advancing the existing phase, i.e., from A to B, from B to C, and so on, and the current supplied to each phase is the same and constant. In the third step 5, the calculated phase data and the current data are set into a phase change buffer (PCB) 51 (Fig. 13) in the driver circuit 5 (Fig. 8). In the fourth step 4, the calculated phase data is set into the existing phase register 39. In the fifth step 5, the short time data $t_s$ is set into the timer 101 (Fig. 8 and Fig. 13). This short time data $t_s$ is used to initially write the contents in the PCB 51 (Fig. 13) into an output buffer circuit 52 (Fig. 13). In the sixth step 6, the period determined by the short time data $t_s$ is counted. When the set period is passed, the phase data and the current control data in the PCB 51 are written into an output buffer circuit 52 (Fig. 13). Thus, the start control process is completed.

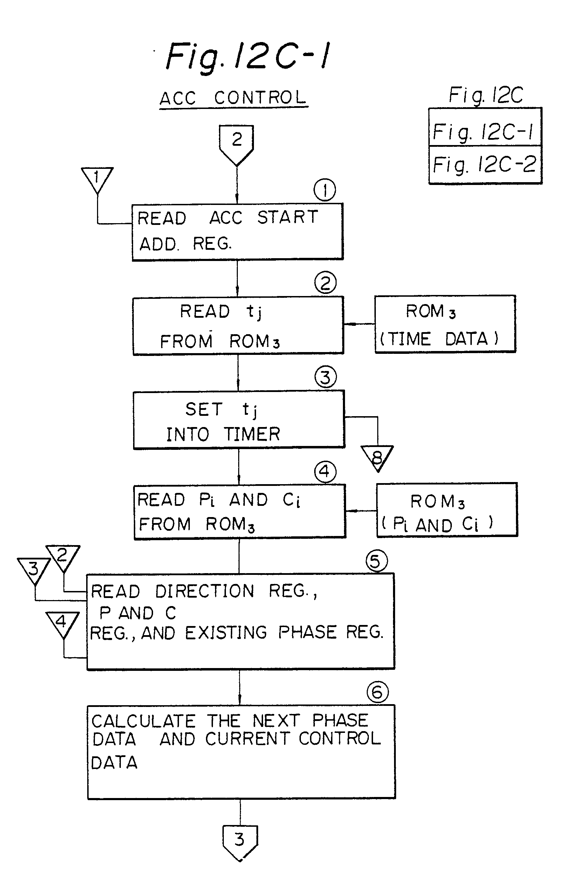

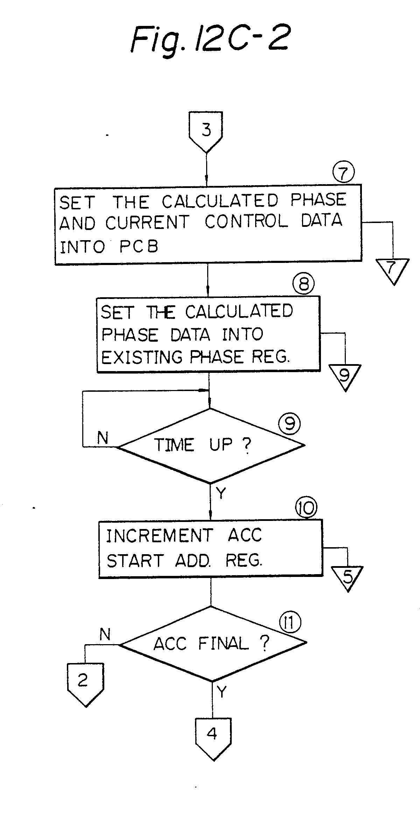

Figure 12C shows a detailed process flow of the acceleration control executed by a part of the step 6 in the general flow in Fig. 8. In Fig. 12C, in the first step 1, the contents of the acceleration start address register 351, which stores at this stage the first address for carrying out the first step of the rotation of the print wheel, are read. In the second step 2, by using the contents read from the acceleration start address register 351 as an address $A_j$ for accessing the $ROM_3$, the time data $t_j$, and at this stage, the time data $t_1$, is read. In the third step 3, the time data $t_j$ is set in the timer 101. In the fourth step 4, by accessing the same address of the $ROM_3$ as in the above step 2, phase data $P_j$ and current control data $C_j$, and, at this stage, the phase data $P_1$ and the current control data $C_1$, are read from the $ROM_3$. In the fifth step 5 through the eighth step 8, similar processings as in the first step 1 through the fourth step 4 in the start control process shown in Fig. 12B are carried out, so that the PCB 51 (Fig. 13) is updated to store the phase data designating a phase to be energized in the next step of rotation and the current control data designating an electric current to be supplied to the phase, and also the existing phase register 39 is updated to store the same phase data as that stored in the PCB 51. In the ninth step 9, the period determined by the time data $t_j$ stored in the timer 101 is counted. During the period, the acceleration step for the time data $t_j$ is carried out. In the tenth step 10, the contents in the acceleration start address register 351 are incremented so as to designate the second step of rotation. The above described steps 1 through 10 are repeated until the contents in the acceleration start address register 351 represent the final step of acceleration.

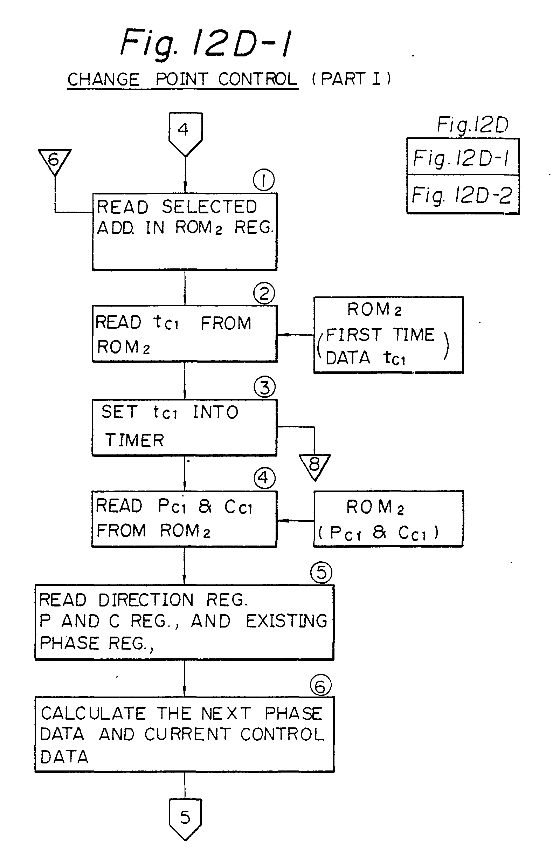

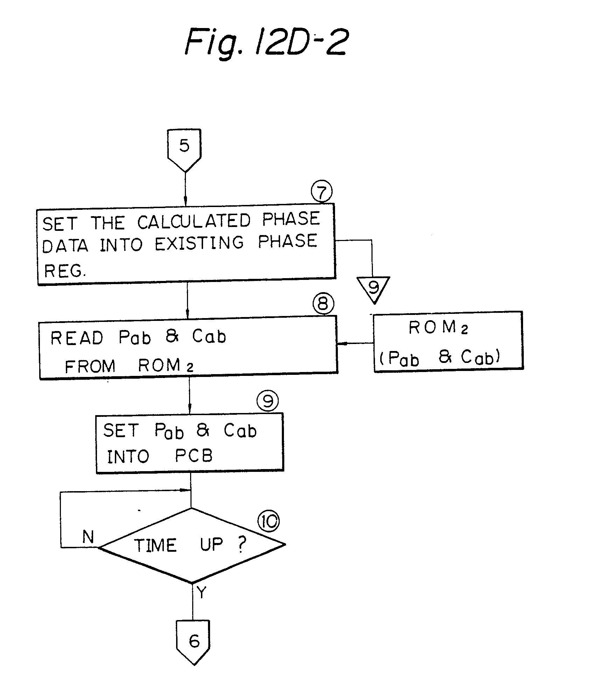

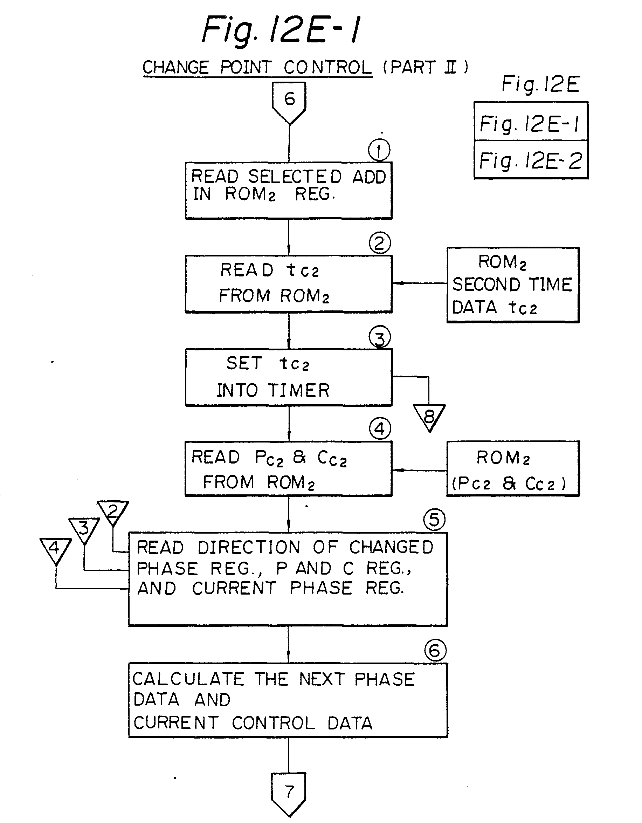

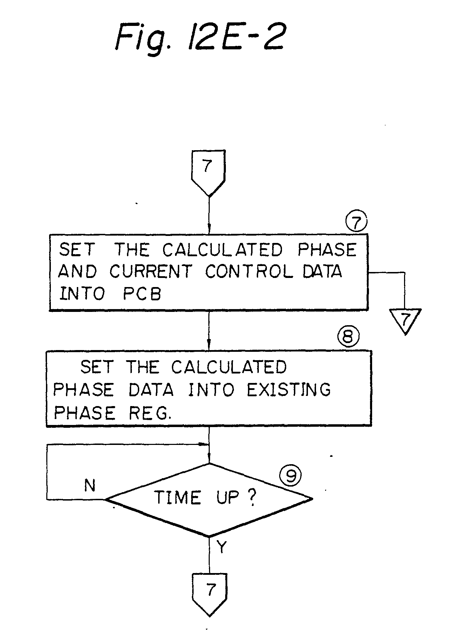

The change point control process, to which the present invention is most pertinent, will be now described with reference to Figs. 12D and 12E.

In Fig. 12D, a part of the change point control process is shown, in which, in the first step 1, the selected address in $ROM_2$ register 38 is read. In the second step 2, by using the data read in the first step 1 as an accessing address, the $ROM_2$ is accessed to read the first time data $t_{c1}$ which determines the ON period $T_{ON}$ (Fig. 8A). In the third step 3 through the sixth step 6, similar processings as in the second step 2 through the fifth step 5 in the acceleration control shown in Fig. 12C are carried out, except that the time data $t_{c1}$, the phase data $P_{c1}$, and the current control data $C_{c1}$ are those for the change point control process. In the seventh step 7 in Fig. 12D, the calculated phase data is set into the existing phase register 39 (Fig. 12B). In the eighth step 8, the $ROM_2$ is accessed to read the absolute phase data $P_{ab}$ and the absolute current control data $C_{ab}$. In the ninth step 9, the absolute phase data $P_{ab}$ and the absolute current control data $C_{ab}$ are set in the PCB 51. It should be noted that, different from the acceleration process, the phase data $P_{c1}$ and the current control data $C_{c1}$ are not set in the PCB 51 in the change point control process. In the tenth step, the ON period $T_{ON}$ (Fig. 8A) set by the time data $t_{c1}$ is counted by the timer so that, during the ON period, the phase designated in the final step in the acceleration process is energized.

Referring to Fig. 12E, another part of the change point control process is shown, in which the first step 1 through the sixth step 6 are similar to the first step 1 through the sixth step 6 in Fig. 12D, except that, in Fig. 12E, the read time data, the read phase data, and the read current control data are $t_{c2}$, $P_{c2}$, and $C_{c2}$, respectively. In the seventh step 7, the calculated phase data and the calculated current control data are set in the PCB 51. The data set in the PCB 51 are used for controlling the first step in the subsequent deceleration process. In the eighth step 8, the calculated data is also set in the existing phase register 39. In the ninth step 9, the period determined by the time data $t_{c2}$ is counted by the timer 101. During the period, the phase designated by the absolute phase data is energized with an electric current designated by the absolute current control data $C_{ab}$. In one embodiment, the phase energized during the period determined by the time data $t_{c2}$ is the same as the precedingly energized phase during the ON period $T_{ON}$, and is energized with the same electric current as in the ON period. In another embodiment, none of the phases is energized during the period designated by the time data $t_{c2}$.

After the period is over, the change point control is completed.

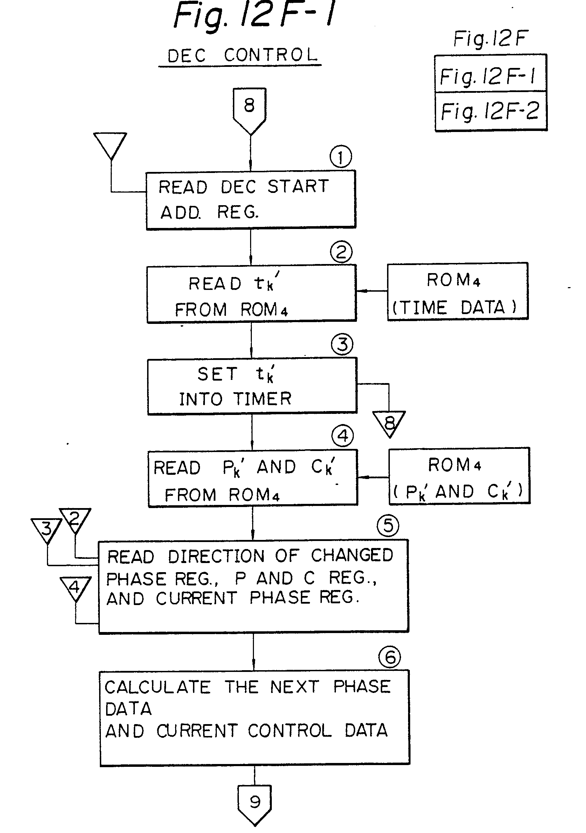

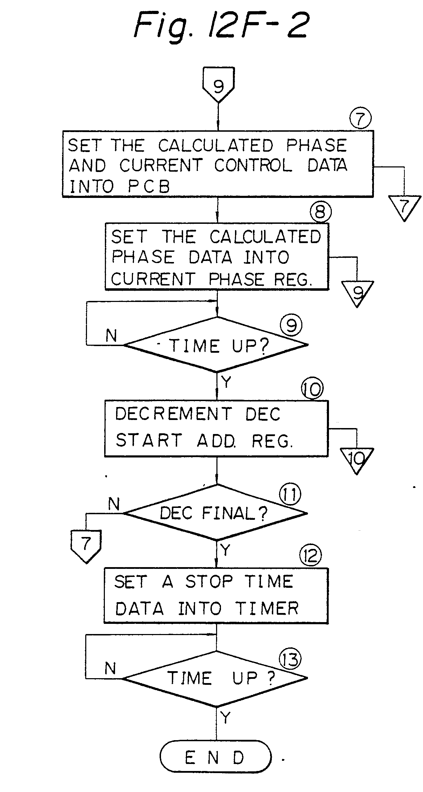

Fig. 12F shows a detailed process flow of the deceleration control executed by a part of the step 6 in the general flow in Fig. 8. In Fig. 8, the deceleration process executed by the steps 1 through 11 is substantially the same as the acceleration process executed by the steps 1 through 11 shown in Fig. 12C, except that, in the deceleration process, the read data are time data $t'_k$, phase data $P'_k$, and current control data $C'_k$, which are read from the $ROM_4$, and that, in the step 10, the contents in the deceleration start address register 37 are decremented. The steps 1 through 10 in the deceleration process are repeated until the contents in the deceleration start address register 37 represent the final step of deceleration. After this, in the step 12, stop time data is set in the timer 101. The stop time data designates a period necessary to stop the print wheel. In the step 13, the period necessary to stop the wheel is counted. When the period is counted, the designated character mounted on the wheel stops at the desired position.

Fig. 13 is a circuit diagram showing in detail the driver circuit ($DV_2$) 5 in the stepper motor control system, according to an embodiment of the present invention. The circuit diagram in Fig. 13 is adapted to select a desired character mounted on the print wheel 81 (Fig. 3B). In Fig. 13, the driver circuit 5 includes the PCB 51, the output buffer circuit 52, the timer 101, an analog switch 53, comparators 54 and 55, four AND gates $G_A$, $G_B$, $G_C$, and $G_D$, four NPN transistors $T_A$, $T_B$, $T_C$, and $T_D$, and the stepper motor 8 including four coils $L_A$, $L_B$, $L_C$, and $L_D$. The driver circuit 5 further includes four diodes $D_{A1}$, $D_{B1}$, $D_{C1}$, and $D_{D1}$ having cathodes connected to the collectors of the transistors $T_A$, $T_B$, $T_C$, and $T_D$, respectively, and having anodes connected to one end of the coils $L_A$, $L_B$, $L_C$, and $L_D$, respectively. The other ends of these coils are connected to a first power supply $E_1$ of, for example, 28 V. The driver circuit 5 still further includes four diodes $D_{A2}$, $D_{B2}$, $D_{C2}$, and $D_{D2}$ having cathodes connected to one ends of the coils $L_A$, $L_B$, $L_C$, and $L_D$, respectively, and having anodes connected to the ground. The analog switch 53 has eight output terminals $T_1$ through $T_8$. The terminal $T_1$ is connected through a resistor $R_1$ to a second power supply $E_2$ of for example, 5 V. The terminals $T_2$ through $T_4$ are connected through resistors $R_2$ through $R_4$, respectively, to a noninverted terminal of the comparator 54. The terminal $T_5$ is grounded. The terminals $T_6$ through $T_8$ are connected through resistorrs $R_6$, $R_7$, and $R_8$, respectively, to a noninverted terminal of another comparator 55. Between the noninverted terminal of the comparator 54 and the second power supply $E_2$, a resistor $R_9$ is connected. Between the noninverted terminal of the comparator 54 and the ground, a resistor $R_{10}$ is connected. Between the inverted terminal of the comparator 54 and the ground, a capacitor $C_1$, and a resistor $R_{11}$ and a current detecting resistor $R_{C1}$ connected in series are connected in parallel. The emitters of the transistors $T_A$ and $T_C$ are connected, through the resistor $R_{C1}$, to the ground. Between the noninverted terminal of the comparator 55 and the first power supply, a resistor $R_{12}$ is connected. Between the noninverted terminal of the comparator 55 and the ground, a capacitor $C_2$, and a resistor $R_{14}$ and a current detecting resistor $R_{C2}$ connected in series are connected in parallel.

The output buffer circuit 52 has four outputs $O_1$, $O_2$, $O_3$, and $O_4$ for providing the phase data P regarding the phases A, B, C, and D, respectively, and has three outputs $O_5$, $O_6$, and $O_7$ for providing the current control data C to the analog switch 53. The outputs $O_1$, $O_2$, $O_3$, and $O_4$ are connected to one input of the AND gates $G_A$, $G_B$, $G_C$, and $G_D$, respectively. The other inputs of the AND gates $G_A$ and $G_C$ are connected to the output of the comparator 54. Other inputs of the AND gates $G_B$ and $G_D$ are connected to the output of the comparator 55.

The operation of the circuit in Fig. 13 is as follows.

The PCB 51 stores, by means of firmware, a phase data P designating the phase to be energized, and a current control data designating the control current to be supplied to the phase, as before described in detail. The data stored in the PCB 51 are transferred into the output buffer circuit 52 when it receives a write-in signal W from the timer 101, which provides the write-in signal after the period set in the timer 101 has passed. The timer 101 also provides an interruption signal INTR to the CPU 1 (Fig. 3A).

The analog switch 53 can select one of the eight output terminals $T_1$ through $T_8$ to be grounded, depending on the three bits of the current control data P. When one of the output. terminals $T_1$ through $T_8$ is selected to be grounded, the potentials at the noninverted terminals of the comparators 54 and 55 i.e., the potentials at points A and B, are determined. The determined potentials are used as reference voltages for the comparators 54 and 55. When a current flows from the first power supply $E_1$ through the coil $L_A$, the diode $D_{A1}$, the transistor $T_A$, and the current detecting resistor $R_{C1}$, to the ground, a voltage is produced across the resistor $R_{C1}$. Thus, a voltage is applied to the inverted terminal of the comparator 54. If the voltage at the inverted terminal of the comparator 54 becomes higher than the reference voltage, the comparator 54 provides a high level signal to the AND gates $G_A$ and $G_C$. In this state, when the phase data P designates the phase A to be energized, a high level signal is provided from the output $O_1$ of the output buffer circuit 52 to the AND gate $G_A$. Thus, the transistor $T_A$ receives the high level signal at its base, so that the transistor $T_A$ becomes stably conductive. As a result, the phase A is selected to be energized.

A similar selection of phases can be effected with respect to the other phases B, C, and D.

An advantage is obtained by the circuit configuration shown in Fig. 13. That is, when the transistor $T_A$ is suddenly turned from an on state to an off state, an electromotive force e is induced across the coil $L_C$, due to electromagnetic induction. This electromotive force e is far greater than the first power supply voltage $E_1$, because of the sudden cut off of the transistor $T_A$. Therefore, a current I flows through a path from the coil $L_C$, through the first power supply $E_1$, the ground, and the diode $D_{C2}$ to the coil $L_C$. Thus, the energy stored in the coil $L_A$ is returned back to the first power supply $E_1$ from the coil $L_C$, and an element for consuming the induced electric power is not necessary in the circuit in Fig. 13.

This feature is advantageous over the conventional driver circuit, because, conventionally, elements for consuming the induced electric power are necessary, so that a considerable amount of heat is generated by the power consuming elements. In addition, the power consuming elements in the conventional driver must have a tolerance voltage higher than the induced voltage due to electromagnetic induction. Further, since the electric power due to electromagnetic induction is consumed by the power consuming elements, the efficiency of the first power supply is deteriorated.

In the foregoing description of the embodiments, a one-phase energizing method is mainly described in order to give an easy understanding. In practice, however, one-two phase energization or two phase-energization is more effectively carried out. Further, according to an embodiment of the present invention, fine control of energization is also carried out in the vicinity of the target position.

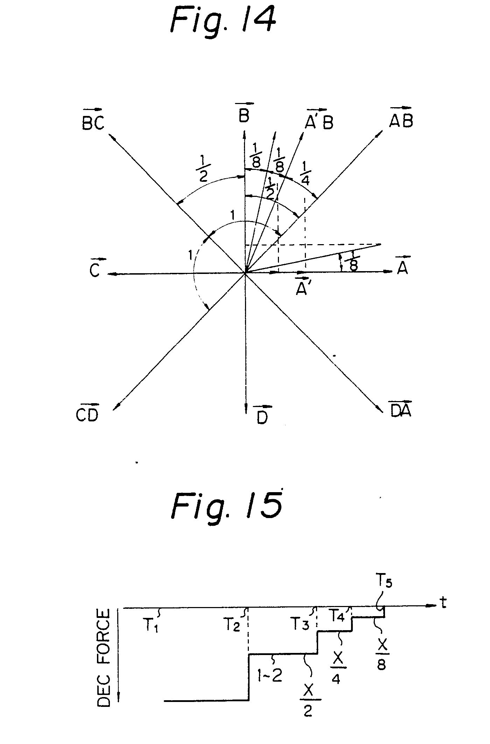

These methods for energizing the phases are described with reference to Fig. 14. In Fig. 14, currents supplied to the four phases A, B, C, and D are expressed by four vectors $\vec{A}$, $\vec{B}$, $\vec{C}$, and $\vec{D}$, and each adjacent two of the four vectors are separated by 90 degrees from each other, assuming that the stepping angle of rotation of the rotor for each step in this energization is X degrees.

In the one-phase energization, the phases A, B, C, and D are cyclically energized to provide a force proportional to the current $\vec{A}$, $\vec{B}$, $\vec{C}$, or $\vec{D}$.

In the two-phase energization, two phases A and B, B and C, C and D, or D and A are simultaneously energized, during one step of rotation. In the figure, vectors $\overrightarrow{AB}$, $\overrightarrow{BC}$, $\overrightarrow{CD}$, and $\overrightarrow{DA}$ express the current simultaneously supplied to the two phases, respectively. Each adjacent two of the four vectors $\overrightarrow{AB}$, $\overrightarrow{BC}$, $\overrightarrow{CD}$, and $\overrightarrow{DA}$ are separated by 90 degrees from each other, that is, the stepping angle is also X. The two-phase energization can provide a force proportional to the scalar product of the adjacent vectors $\vec{A}$, and $\vec{B}$, $\vec{B}$ and $\vec{C}$, $\vec{C}$ and $\vec{D}$, or $\vec{D}$ and $\vec{A}$, which is greater than the force provided in the one-phase energization. Therefore, the two-phase energization is practically carried out.

In the one-two phase energization, the phases A and B, B, B and C, C, C and D, D, D and A, and A are cyclically energized. The stepping angle in this energization is X/2 degrees.

The phase or phases to be energized in one step of rotation can be determined by the phase data stored in the $ROM_2$ (Fig. 9), the $ROM_3$ (Fig. 10), or the $ROM_4$ (Fig. 11), as described before.

In addition to the determination of the phase or phases to be energized, the current to be supplied to the energized phase or phases can be controlled by the current control data stored in the $ROM_2$, the $ROM_3$, or the $ROM_4$, as described before. In the above-mentioned one-phase energization, two-phase energization, and one-two phase energization, the current control data C determines the constant and maximum current to be supplied to each phase. Therefore, the currents

$\vec{A}$, $\vec{B}$, $\vec{C}$, and $\vec{D}$ are equal to each other. The current control data is effectively used in the fine control of energization in the vicinity of the target position.

In one embodiment of the fine control, after the energization of the phases A and B by supplying the current $\overrightarrow{AB}$, the current supplied to the phase A is changed to A' which is expressed as: A'=A cos 67.5°=0.38 A, and the current $\vec{B}$ is maintained as it is. As a result, a current $\overrightarrow{A'B}$ which is a scalar product of the vectors A' and B is supplied to the phases A and B after X/4 degrees of rotation of the rotor. That is, in this fine control, the stepping angle is X/4 degrees.

In a similar way, X/8 degrees or X/16 degrees of a stepping angle can be realized by controlling the current supplied to each phase. In the vicinity of the target position, by effecting the above-mentioned fine control, overshoot of the rotor with respect to the target position can be prevented, as will be seen from Figs. 14 and 15.

Fig. 15 shows the deceleration force with respect to time during a deceleration process according to an embodiment of the present invention. In Fig. 15, during a period from a time $T_1$ to a time $T_2$ at which the designated character reaches a position before the target position by, for example, four characters, the two-phase energization is executed with the maximum current. During the next period from the time $t_2$ to a time $T_3$ at which the designated character reaches a position before the target position by, for example, two characters, the one-two phase energization is executed with the maximum current. During a period from the time $T_3$ to a time $T_4$ at which the designated character reaches a point before the target position by one character, the fine control of the energization is executed with, for example, the current $\vec{A}'$ and the current $\vec{B}$. In the fine control, the stepping angle is X/4. During the period from the time $T_4$ to a time $T_5$ at which the rotor steps, the stepping angle is X/8. Thus, the deceleration force is gradually decreased so that the rotor steps instantly and accurately at the target position.

As preferred embodiments, the phase data P and the current control data C can determine the following nine modes 1 through 9 of operation:

1. two-phase energizing with the maximum current $I_{max}$;

2. one-two phase energizing with the maximum current $I_{max}$;

3. one phase is not changed and the other phase is energized with a current of 3/4 $I_{max}$;

4. one phase is not changed and the other phase is energized with a current of 1/2 $I_{max}$;

5. one phase is not changed and the other phase is energized with a current of 1/4 $I_{max}$;

6. one phase is energized with a current of 3/4 $I_{max}$ and the other phase is not changed;

7. one phase is energized with a current of 1/2 $I_{max}$ and the other phase is not changed;

8. one phase is energized with a current of 1/4 $I_{max}$ and the other phase is not changed; and

9. both phases are not changed.

The relationship among the contents in the existing phase register 39 (Fig. 12B), the modes, and the currents supplied in the next step is as follows:

| Existing register | Mode | Next step |
|---|---|---|
| AB | 1 | $\vec{B} \cdot \vec{C}$ |
| AB | 2 | $\vec{B}$ |
| AB | 3 | $3/4\,\vec{A} \cdot \vec{B}$ |
| AB | 4 | $1/2\,\vec{A} \cdot \vec{B}$ |
| AB | 5 | $1/4\,\vec{A} \cdot \vec{B}$ |
| AB | 6 | $\vec{A} \cdot 3/4\,\vec{B}$ |
| AB | 7 | $\vec{A} \cdot 1/2\,\vec{B}$ |
| AB | 8 | $\vec{A} \cdot 1/4\,\vec{B}$ |
| AB | 9 | $\vec{A} \cdot \vec{B}$ |

In place of the four-phase stepper motor, any stepper motor having any number of phases can be driven by the stepper motor control system according to the present invention. Further, in the change point control between the acceleration and the deceleration, in place of providing the ON period, or the ON period and the OFF period, various modes of operation can be carried out by appropriately setting the contents in the $ROM_2$ (Fig. 9). Still further, the present invention may be applied to drive not only the print wheel or the space mechanism in a printer, but also to drive any other equipment.

From the foregoing description, it will be apparent that, according to the present invention, an improved stepper motor control system is provided which can step, in a jump control mode, the rotation of a stepper motor accurately and instantly at a desired position, without the need for additional acceleration and deceleration tables, by providing a change point control table for controlling a change point between acceleration and deceleration. In addition, the stepper motor control system according to the present invention has an improved driver circuit which can return the regenerative energy stored in the coils of the stepper motor to a power supply without including an element for consuming the regenerative energy, resulting in a small heat generation and low cost. Further, by employing phase data and current control data into the deceleration table, fine control can be effected in the vicinity of the target position.

**Claims**

1. A control method for rotation of a stepper motor (7, 8, 9) by a desired amount of movement (St), the stepper motor comprising a rotor and a plurality of phases (A, B, C, D), and the rotor being coupled to drive a rotatable member (71, 81), said method including, in the case of said desired amount of movement being larger than a predetermined amount (Sp), the steps of:

accelerating a rotation of said stepper motor during an acceleration period by supplying an acceleration pulse sequence (1...m) to said stepper motor until a rotation speed (V) reaches a predetermined rotation speed (Vc),

driving said stepper motor during a constant speed period substantially at a constant speed equal to said predetermined rotation speed (Vc); and

decelerating a rotation of said stepper motor during a deceleration period from said predetermined rotation speed (Vc) by suppling a deceleration pulse sequence (n'...1') to said stepper motor so as to stop said rotation at said desired amount,

characterised in that said method includes, in the case of said desired amount of movement (St) being smaller than said predetermined amount (Sp), the steps of:

accelerating the rotation of the stepper motor during an acceleration period by supplying an acceleration pulse sequence (1...A−1) to said stepper motor until said rotation speed (V) reaches a given rotation speed dependent upon said desired amount of movement (St),

controlling the stepper motor during a change point period ($T_A$) between acceleration and deceleration in accordance with change point control data, the change point control data indicating a first predetermined energizing period ($T_1$), for energizing a first phase or phases of the stepper motor subsequent to the last energized phase or phases in the acceleration period, and being so determined as to render substantially coincident the speed and the position of said rotor at the end of said change point period ($T_A$) with the required speed and position of said rotor at the beginning of a subsequent deceleration period; and

decelerating said rotation of said stepper motor during said deceleration period by supplying a deceleration pulse sequence (B'...1') to said stepper motor.

2. A control method as set forth in claim 1, wherein said first predetermined energizing period ($T_1$) is substantially the same as said change point period ($T_A$).

3. A control method as set forth in claim 1 or 2, wherein said first predetermined energizing period ($T_1$) is so determined as to compensate the acceleration energy generated during a part of said first predetermined energizing period ($T_1$) with the deceleration energy generated during the remaining part of said first predetermined energizing period ($T_1$).

4. A control method as set forth in claim 1 or 2, wherein said first predetermined energizing period ($T_1$) is so determined as to compensate the acceleration energy generated during a part of said first predetermined energizing period ($T_1$) with the deceleration energy generated during the remaining part of said first predetermined energizing period $(T_1)$ plus the friction energy consumed in said stepper motor during said change point period $(T_A)$.

5. A control method as set forth in claim 1, or claim 3 or 4 as appended to claim 1, wherein the change point period $(T_A)$ further comprises a second predetermined energizing period $(T_2)$.

6. A control method as set forth in claim 5, wherein none of said phases (A, B, C, D) is energized during said second predetermined energizing period $(T_2)$.

7. A control method as set forth in claim 6, wherein said second predetermined energizing period $(T_2)$ is so determined as to compensate, during said change point period $(T_A)$, the energy of acceleration with the energy of deceleration of said stepper motor.

8. A control method as set forth in claim 5, 6, or 7, wherein said first predetermined energizing period $(T_1)$ plus said second predetermined energizing period $(T_2)$ substantially equals said change point period $(T_A)$.

9. A control method as set forth in claim 8, wherein said first predetermined energizing period $(T_1)$ and said second predetermined energizing period $(T_2)$ are so determined as to coincide the speed and the position of said rotor at the end of said change point period $(T_A)$ with the required speed and position of said rotor at the beginning of said deceleration period.

10. A control method as set forth in claim 8 or 9, wherein said first predetermined energizing period $(T_1)$ and said second predetermined energizing period $(T_2)$ are so determined as to compensate the acceleration energy generated during a part of said change point period $(T_A)$ with the deceleration energy generated during the remaining part of said change point period $(T_A)$.

11. A control method as set forth in claim 8 or 9, wherein said first predetermined energizing period $(T_1)$ and said second predetermined energizing period $(T_2)$ are so determined as to compensate the acceleration energy generated during a part of said change point period $(T_A)$ with the deceleration energy generated during the remaining part of said change point period $(T_A)$ plus the friction energy consumed in said stepper motor during said change point period $(T_A)$.

12. A stepper motor control system for rotating a stepper motor (7, 8, 9) by a desired amount of movement (St), comprising

a stepper motor (7, 8, 9) having a rotor coupled to a rotatable member (71, 81) for rotating said rotatable member, and a plurality of phases (A, B, C, D), and

a control means (1, 2, 3, 4, 5, 6), electrically coupled to said stepper motor and operable to supply pulse steps to the stepper motor for accelerating rotation of the stepper motor during an acceleration period, driving the stepper motor at a substantially constant velocity during a constant speed period when applicable, and decelerating rotation of the stepper motor during a deceleration period,

said control means comprising a processor means (1) and storing means $(ROM_2, ROM_3, ROM_4)$ for storing control data including control data for the acceleration period and control data for the deceleration period,

characterised in that said control data stored in said storing means further includes change point control data for use in controlling the stepper motor during a change point period $(T_A)$ and so determined as to render substantially coincident the speed and position of said rotor at the end of the change point period $(T_A)$ with the required speed and position of said rotor at the beginning of the deceleration period, and in that said processor means is operable to control said stepper motor in accordance with said control data including the change point control data when said desired amount of movement (St) is less than said first predetermined value (Sp).

13. A stepper motor control system as set forth in claim 12, wherein said storing means comprises:

a first storing means $(ROM_2)$ for storing a plurality of first sets of first control data, each of said first sets including at least a first number of acceleration steps of said stepper motor, a second number of constant-velocity steps of said stepper motor for use when said desired amount of movement is greater than a first predetermined value (Sp), a third number of deceleration steps of said stepper motor, and said change point control data for use when said desired amount of movement (St) is less than said first predetermined value (Sp), one of said first sets being selected in accordance with said desired amount of movement so as to determine the necessary numbers of acceleration steps, constant-velocity steps, and deceleration steps;

a second storing means $(ROM_3)$ for storing a plurality of second sets of second control data, each of said second sets including at least first time data $(t_j)$ indicating an acceleration period for one of said acceleration steps;

a third storing means (23) for storing a plurality of third sets of third control data, each of said third sets including at least second time data $(t_c)$ indicating a constant-velocity period for one of said constant-velocity steps; and

a fourth storing means $(ROM_4)$ for storing a plurality of fourth sets of fourth control data, each of said fourth sets including at least third time data $(t'_K)$ indicating a deceleration period for one of said deceleration steps;

and wherein said processor means (1) is operable to control said stepper motor in accordance with a selected one of said first sets of said first control data corresponding to said desired amount of movement including said change point control data when applicable, a selected one of said second sets of second control data, a selected one of said third sets of third control data when applicable, and a selected one of said fourth sets of fourth control data.

14. A stepper motor control system as set forth in claim 12 or 13, wherein said change point control data includes first time data indicating a first predetermined energizing period $(T_1)$ to energize the first phase or phases subsequent to the last energized phase or phases in the acceleration period.

15. A stepper motor control system as set forth in claim 14, wherein said first predetermined energizing period $(T_1)$ is substantially the same as said change point period $(T_A)$.

16. A stepper motor control system as set forth in claim 14 or 15, wherein said first predetermined energizing period $(T_1)$ is so determined as substantially to coincide the speed and the position of said rotor at the end of said change point period $(T_A)$ with the required speed and position of said rotor at the beginning of said deceleration period.

17. A stepper motor control system as set forth in claim 15 or 16, wherein said first predetermined energizing period $(T_1)$ is so determined as to compensate the acceleration energy generated during a part of said first predetermined energizing period $(T_1)$ with the deceleration energy generated during the remaining part of said first predetermined energizing period $(T_1)$.

18. A stepper motor control system as set forth in claim 15 or 16, wherein said first predetermined energizing period $(T_1)$ is so determined as to compensate the acceleration energy generated during a part of said first predetermined energizing period $(T_1)$ with the deceleration energy generated during the remaining part of said first predetermined energizing period $(T_1)$ plus the friction energy consumed in said stepper motor during said change point period $(T_A)$.

19. A stepper motor control system as set forth in any one of claims 14 to 18 wherein each of said second sets of second control data further includes acceleration phase data $(P_j)$ for determining the next phase or phases (A, B, C, D) to be energized after said acceleration period for one of said acceleration steps, and acceleration current control data $(C_j)$ for determining the electrical current to be supplied to said next phase or phases, whereby, said first phase or phases to be energized during said first predetermined energizing period $(T_1)$ is determined by said acceleration phase data in the last one of said second sets corresponding to the final step of said acceleration period, and the electrical current to be supplied to said first phase or phases is determined by said acceleration current control data in the last one of said second sets corresponding to the final step of said acceleration period.

20. A stepper motor control system as set forth in claim 19, wherein said first predetermined energizing period $(T_1)$ is smaller than said change point period $(T_A)$, and said change point control data further includes second time data indicating a second predetermined energizing period $(T_2)$ to energize an absolute said phase or phases (A, B, C, D) after said first predetermined period $(T_1)$, absolute phase data $(P_{ab})$ indicating the absolute phase or phases to be energized after said first predetermined energizing period $(T_1)$ and within said change point period $(T_A)$, and absolute cur-

rent control data $(C_{ab})$ indicating the electrical current to be supplied to said absolute phase or phases.

21. A stepper motor control system as set forth in claim 20, wherein said absolute phase data and said absolute current control data indicate that none of said phases are energized during said second predetermined energizing period $(T_2)$.

22. A stepper motor control system as set forth in claim 21, wherein said second predetermined energizing period $(T_2)$ is so determined as to compensate, during said change point period $(T_A)$, the energy of acceleration with the energy of deceleration of said stepper motor.

23. A stepper motor control system as set forth in claim 20, 21 or 22, wherein said first predetermined energizing period $(T_1)$ plus said second predetermined energizing period $(T_2)$ substantially equals said change point period $(T_A)$.

24. A stepper motor control system as set forth in claim 23, wherein said first predetermined energizing period $(T_1)$ and said second predetermined energizing period $(T_2)$ are so determined as to coincide the speed and the position of said rotor at the end of said change point period $(T_A)$ with the required speed and the position of said rotor at the beginning of said deceleration period.

25. A stepper motor control system as set forth in claim 23 or 24, wherein said first predetermined energizing period $(T_1)$ and said second predetermined energizing period $(T_2)$ are so determined as to compensate the acceleration energy generated during a part of said change point period $(T_A)$ with the deceleration energy generated during the remaining part of said change point period $(T_A)$.

26. A stepper motor control system as set forth in claim 23 or 24, wherein said first predetermined energizing period $(T_1)$ and said second predetermined energizing period $(T_2)$ are so determined as to compensate the acceleration energy generated during a part of said change point period $(T_A)$ with the deceleration energy generated during the remaining part of said change point period $(T_A)$ plus the friction energy consumed in said stepper motor during said change point period $(T_A)$.

27. A stepper motor control system as set forth in claim 13 or any one of claims 14 to 26 as appended to claim 13, wherein each of said fourth sets of fourth control data further includes deceleration phase data $(P_k')$ for determining the next phase or phases (A, B, C, D) to be energized after said deceleration period for one of said deceleration steps, and deceleration current control data $(C_k')$ for determining the electrical current to be supplied to said next phase or phases, whereby, in the vicinity of a target position to be stopped at, a fine control of deceleration can be effected by decreasing current supplied to the energized phase or phases.

28. A stepper motor control system as set forth in any one of claims 12 to 27, wherein said stepper motor control system is adapted to drive a serial printer having a print wheel (81) connected to said stepper motor (8).

29. A stepper motor control system as set forth in any one of claims 12 to 27, wherein said stepper motor control system is adapted to drive a serial printer having a space mechanism (71) connected to said stepper motor (7).

**Patentansprüche**

1. Verfahren zur Regelung der Rotation eines Schrittmotors (7, 8, 9) um einen gewünschten Bewegungsbetrag (St), welcher Schrittmotor einen Rotor und eine Vielzahl von Phasen (A, B, C, D) umfaßt und dessen Rotor zum Antrieb eines rotierbaren Teils (71, 81) gekoppelt ist, welches Verfahren in dem Fall, in dem der gewünschte Bewegungsbetrag größer als ein vorbestimmter Betrag (Sp) ist, die folgenden Schritte umfaßt:

Beschleunigung einer Rotation des Schrittmotors während einer Beschleunigungsperiode durch Lieferung einer Beschleunigungspulsfolge (1...m) an den Schrittmotor, bis eine Rotationsgeschwindigkeit (V) eine vorbestimmte Rotationsgeschwindigkeit (Vc) erreicht,

Antrieb des Schrittmotors während einer konstanten Geschwindigkeitsperiode im wesentlichen mit einer konstanten Geschwindigkeit, die gleich der genannten vorbestimmten Rotationsgeschwindigkeit (Vc) ist; und

Verzögerung einer Rotation des Schrittmotors während einer Verzögerungsperiode von der genannten vorbestimmten Rotationsgeschwindigkeit (Vc) durch Lieferung einer Verzögerungspulsfolge (n'...1') zu dem Schrittmotor, um so die genannte Rotation bei dem gewünschten Betrag zu stoppen,

dadurch gekennzeichnet, daß das genannte Verfahren, falls der gewünschte Bewegungsbetrag (St) kleiner als der vorbestimmte Betrag (Sp) ist, die folgenden Schritte umfaßt:

Beschleunigung der Rotation des Schrittmotors während einer Beschleunigungsperiode durch Lieferung einer Beschleunigungspulsfolge (1...A−1) an den Schrittmotor, bis die genannte Rotationsgeschwindigkeit (V) eine vorgegebene Rotationsgeschwindigkeit erreicht, die von dem genannten gewünschten Betrag der Bewegung (St) abhängt,

Steuerung des Schrittmotors während einer Änderungspunktperiode ($T_A$) zwischen Beschleunigung und Verzögerung, in Übereinstimmung mit Änderungspunktsteuerdaten, welche Änderungspunktsteuerdaten eine erste vorbestimmte Erregungsperiode ($T_1$), zur Erregung einer ersten Phase oder Phasen des Schritt- motors nach der letzten erregten Phase oder Phasen in der Verzögerungsperiode, anzeigen, und so bestimmt werden, daß die Geschwindigkeit und die Position des genannten Rotors am Ende der genannten Änderungspunkt- periode ($T_A$) mit der erforderlichen Geschwindigkeit und Position des genannten Rotors zu Beginn einer folgenden Verzögerungsperiode im wesentlichen koinzident gemacht werden; und

Verzögerung der genannten Rotation des Schrittmotors während der genannten Verzöge- rungsperiode durch Lieferung einer Verzöge- rungspulsfolge (B'...1') an den genannten Schrittmotor.

2. Regelverfahren nach Anspruch 1, bei dem die genannte erste vorbestimmte Erregungspe- riode ($T_1$) im wesentlichen dieselbe wie die genannte Änderungspunktperiode ($T_A$) ist.

3. Regelverfahren nach Anspruch 1 oder 2, bei dem die genannte erste vorbestimmte Erre- gungsperiode ($T_1$) so bestimmt wird, daß die Beschleunigungsenergie, die während eines Teiles der genannten ersten vorbestimmten Erre- gungsperiode ($T_1$) erzeugt wird, mit der Verzögerungsenergie, die während des verbliebenden Teils der genannten ersten vorbestimmten Erre- gungsperiode ($T_1$) erzeugt wird, kompensiert wird.

4. Regelverfahren nach Anspruch 1 oder 2, bei dem die genannte erste vorbestimmte Erre- gungsperiode ($T_1$) so bestimmte wird, daß die Verzögerungsenergie, die während eines Teils der genannten ersten vorbestimmten Erregüngs- periode ($T_1$) erzeugt wird, mit der Verzögerungsenergie, die während des verbleibenden Teils der genannten ersten vorbestimmten Erregungspe- riode ($T_1$) erzeugt wird, plus der Reibungsenergie, die im Schrittmotor während der genannten Änderungspunktperiode ($T_A$) verbraucht wird, kompensiert wird.

5. Regelverfahren nach Anspruch 1, oder 3 oder 4 in Verbindung mit Anspruch 1, bei dem die Änderungspunktperiode ($T_A$) ferner einer zweite vorbestimmte Erregungsperiode ($T_2$) umfaßt.

6. Regelverfahren nach Anspruch 5, bei dem keine der genannten Phasen (A, B, C, D) während der genannten zweiten vorbestimmten Erre- gungsperiode ($T_2$) erregt wird.

7. Regelverfahren nach Anspruch 6, bei dem die genannte zweite vorbestimmte Erregungspe- riode ($T_2$) so bestimmt wird, daß während der genannten Änderungspunktperiode ($T_A$) die Beschleunigungsenergie mit der Verzögerungsenergie des Schrittmotors kompensiert wird.

8. Regelverfahren nach Anspruch 5 oder 6 oder 7, bei dem die genannte erste vorbestimmte Erregungsperiode ($T_1$) plus die genannte zweite vorbestimmte Erregungsperiode ($T_2$) im wesent- lichen gleich der Änderungspunktperiod ($T_A$) sind.

9. Regelverfahren nach Anspruch 8, bei dem die genannte erste vorbestimmte Erregungspe- riode ($T_1$) und die genannte zweite vorbestimmte Erregungsperiode ($T_2$) so bestimmt werden, daß die Geschwindigkeit und die Position des genannten Rotors am Ende der genannten Änderungspunktperiode ($T_A$) mit der erforderlichen Geschwindigkeit und Position des genannten Rotors zu dem Beginn der genannten Verzögerungsperiode koinzidieren.

10. Regelverfahren nach Anspruch 8 oder 9, bei dem die genannten erste vorbestimmte Erre- gungsperiode ($T_1$) und die genannte zweite vor- bestimmte Erregungsperiode ($T_2$) so vorbe- stimmt werden, daß die Beschleunigungsener-

gie, die während eines Teils der genannten Änderungspunktperiode ($T_A$) erzeugt wird, mit der Verzögerungsenergie, die während des verbleibenden Teils der genannten Änderungspunktperiode ($T_A$) erzeugt wird, kompensiert wird.

11. Regelverfahren nach Anspruch 8 oder 9, bei dem die genannte erste vorbestimmte Erregungsperiode ($T_1$) und die genannte zweite vorbestimmte Erregungsperiode ($T_2$) so bestimmt werden, daß die Beschleunigungsenergie, die während eines Teils der genannten Änderungspunktperiode ($T_A$) erzeugt wird, mit der Verzögerungsenergie, die während der genannten Änderungspunktperiode ($T_A$) erzeugt wird, plus der Reibungsenergie, die in dem genannten Schrittmotor während der genannten Änderungspunktperiode ($T_A$) erzeugt wird, kompensiert wird.

12. Verfahren zur Regelung eines Schrittmotors zur Rotation eines Schrittmotors (7, 8, 9) um einen gewünschten Bewegungsbetrag (St), mit

einem Schrittmotor (7, 8, 9), der einen Rotor hatt, der mit einem rotierbaren Teil (71, 81) verbunden ist, um das rotierbare Teil zu rotieren, und einer Vielzahl von Phasen (A, B, C, D) und,

einer Steuereinrichtung (1, 2, 3, 4, 5, 6), die elektrisch mit dem genannten Schrittmotor gekoppelt ist und betreibbar ist, um an den Schrittmotor Impulsschritte zu liefern, um die Rotation des Schrittmotors während einer Beschleunigungsperiode zu beschleunigen, den Schrittmotor mit im wesentlichen konstanter Geschwindigkeit während einer Konstantgeschwindigkeitsperiode, wenn anwendbar, anzutreiben und den Schrittmotor während einer Verzögerungsperiode in seiner Rotation zu verzögern,

wobei die genannten Steuereinrichtung eine Prozessoreinrichtung (1) und Speichereinrichtungen (ROM$_2$, ROM$_3$, ROM$_4$) für die Sicherung der Steuerdaten, welche die Steuerdaten für die Beschleunigungsperiode und die Steuerdaten für die Verzögerungsperiode enthalten, umfaßt,

dadurch gekennzeichnet, daß die genannten Steuerdaten, die in der genannten Speichereinrichtung gespeichert sind, ferner Änderungspunktsteuerdaten zur Verwendung bei der Steuerung des Schrittmotors während der Änderungspunktperiode ($T_A$) umfassen und so bestimmt werden, daß sie die Geschwindigkeit und die Position des genannten Rotors an dem Ende der Änderungspunktperiode ($T_A$) im wesentlichen koinzident machen mit der erforderlichen Geschwindigkeit und Position des genannten Rotors zu Beginn der Verzögerungsperiode, und daß die genannte Prozessoreinrichtung betreibbar ist, um den genannten Schrittmotor in Übereinstimmung mit den genannten Steuerdaten, einschließlich der Änderungspunktsteuerdaten zu steuern, wenn der gewünschte Bewegungsbetrag (St) kleiner als der genannte erste vorbestimmte Wert (Sp) ist.

13. Schrittmotorregelsystem nach Anspruch 12, bei dem die genannte Speichereinrichtung umfaßt:

eine erste Speichereinrichtung (ROM$_2$) zum

Speichern einer Vielzahl von ersten Sätzen von ersten Steuerdaten, von denen jeder genannte erste Satz wenigstens einer erste Anzahl von Beschleunigungsschritten des Schrittmotors umfaßt, eine zweite Anzahl von Konstantgeschwindigkeitsschritten des genannten Schrittmotors, zur Verwendung, wenn der genannte gewünschte Bewegungsbetrag größer als ein erster vorbestimmter Wert (Sp) ist, eine dritte Anzahl von Verzögerungsschritten des Schrittmotors, und die genannten Änderungspunktsteuerdaten, zur Verwendung, wenn der genannte gewünschte Bewegungsbetrag (St) kleiner als der genannte erste vorbestimmte Wert (Sp) ist, umfaßt, wobei einer der ersten Sätze in Übereinstimmung mit dem genannten gewünschten Bewegungsbetrag ausgewählt wird, um so die erforderliche Anzahl von Beschleunigungsschritten, Konstantgeschwindigkeitsschritten und Verzögerungsschritten zu bestimmen;

eine zweite Speichereinrichtung (ROM$_3$) zur Speicherung einer Vielzahl von zweiten Sätzen von zweiten Steuerdaten, von denen jeder genannte zweite Satz wenigstens erste Zeitdaten ($t_j$) umfaßt, die eine Beschleunigungsperiode für einen der Beschleunigungsschritte anzeigen;

eine dritte Speichereinrichtung (23) zum Speichern einer Vielzahl von dritten Sätzen von dritten Steuerdaten, wobei jeder dritte Satz wenigstens zweite Zeitdaten ($t_c$) umfaßt, die eine Konstantgeschwindigkeitsperiode für einen der genannten Konstantgeschwindigkeitsschritte anzeigen; und

eine vierte Speichereinrichtung (ROM$_4$) zur Speicherung einer Vielzahl von vierten Sätzen von vierten Steuerdaten, wobei jeder der genannten vierten Sätze wenigstens dritte Zeitdaten ($t'_K$) umfaßt, die eine Verzögerungsperiode für einen der genannten Verzögerungsschritte anzeigen;

und bei dem die genannte Prozessoreinrichtung (1) betreibbar ist, um den genannten Schrittmotor in Übereinstimmung mit einem ausgewählten der ersten Sätze der genannten ersten Steuerdaten, die den genannten gewünschten Bewegungsbetrag einschließlich der genannten Änderungspunktsteuerdaten, falls anwendbar, umfassen, und einem ausgewählten der genannten zweiten Sätze der zweiten Steuerdaten, einem ausgewählten der genannten dritten Sätze der dritten Steuerdaten, wenn anwendbar, und einem ausgewählten der genannten vierten Sätze von vierten Steuerdaten regelt.

14. Schrittmotorregelsystem nach Anspruch 12 oder 13, bei dem die genannten Änderungspunktsteuerdaten erste Zeitdaten umfassen, die eine erste vorbestimmte Erregungsperiode ($T_1$) anzeigen, um die ersten Phase oder Phasen nach der letzten erregten Phase oder Phasen in der Beschleunigungsperiode zu erregen.

15. Schrittmotorregelsystem nach Anspruch 14, bei dem die genannte vorbestimmte Erregungsperiode ($T_1$) im wesentlichen dieselbe wie die genannte Änderungspunktperiode ($T_A$) ist.

16. Schrittmotorregelsystem nach Anspruch 14 oder 15, bei welchem die genannte erste vorbestimmte Erregungsperiode ($T_1$) so bestimmt wird,

daß die Geschwindigkeit und die Position des genannten Rotors am Ende der genannten Änderungspunktperiode ($T_A$) mit der erforderlichen Geschwindigkeit und Position des Rotors zu Beginn der genannten Beschleunigungsperiode im wesentlichen koinzidieren.

17. Schrittmotorregelsystem nach Anspruch 15 oder 16, bei dem die genannte erste vorbestimmte Erregungsperiode ($T_1$) so bestimmt wird, daß die Beschleunigungsenergie, die während eines Teils der genannten ersten vorbestimmten Erregungsperiode ($T_1$) erzeugt wird, mit der Verzögerungsenergie, die während des verbleibenden Teils der genannten ersten vorbestimmten Erregungsperiode ($T_1$) erzeugt wird, kompensiert wird.

18. Schrittmotorregelsystem nach Anspruch 15 oder 16, bei dem die genannte vorbestimmte Erregungsperiode ($T_1$) so bestimmt wird, daß die Beschleunigungs- energie, die während eines Teils der genannten ersten vorbestimmten Erregungsperiode ($T_1$) erzeugt wird, mit der Verzögerungsenergie, die während des verbleibenden Teils der genannten ersten vorbestimmten Erregungsperiode ($T_1$) erzeugt wird, plus der Reibungsenergie, die in dem genannten Schrittmotor während der genannten Änderungspunktperiode ($T_A$) verbraucht wird, kompensiert wird.

19. Schrittmotorregelsystem nach einem der Ansprüche 14 bis 18, bei dem jeder der zweiten Sätze von Steuerdaten ferner Beschleunigungsphasendaten ($P_j$) zur Bestimmung der nächsten Phase oder Phasen (A, B, C, D), die nach der genannten Beschleunigungsperiode für einen der genannten Beschleunigungsschritte erregt werden sollen, und Beschleunigungsstromsteuerdaten ($C_j$), zur Bestimmung des elektrischen Stroms, der der genannten nächsten Phase oder Phasen geliefert werden soll, umfaßt, wodurch die genannte erste Phase oder Phasen, die während der genannten ersten vorbestimmten Erregungsperiode ($T_1$) erregt werden sollen, durch die genannten Beschleunigungsphasendaten in dem einen letzten der genannten zweiten Sätze bestimmt wird, der dem letzten Schritt der genannten Beschleunigungsperiode entspricht, und der elektrische Strom, der der genannten ersten Phase oder Phasen zugeführt werden soll, durch die genannten Beschleunigungsstromdaten in dem einen letzten der zweiten Sätze bestimmt wird, der dem letzten Schritt der Beschleunigungsperiode entspricht.

20. Schrittmotorregelsystem nach Anspruch 19, bei dem die genannte erste vorbestimmte Erregungsperiode ($T_1$) kleiner als die genannte Änderungspunktperiode ($T_A$) ist und die genannten Änderungspunktsteuerdaten ferner zweite Zeitdaten, die eine zweite vorbestimmte Erregungsperiode ($T_2$) anzeigen, um eine absolute Phase oder Phasen (A, B, C, D) nach der genannten ersten vorbestimmten Periode ($T_1$) zu erregen, absolute Phasendaten ($P_{ab}$), die die absolute Phase oder Phasen anzeigen, die nach der genannten ersten vorbestimmten Erregungsperiode ($T_1$) und innerhalb der genannten Änderungspunktperiode ($T_A$)

erregt werden sollen, und absolute Stromsteuerdaten ($C_{ab}$), die den elektrischen Strom anzeigen, der der genannten absoluten Phase oder Phasen zugeführt werden soll, umfassen.

21. Schrittmotorregelsystem nach Anspruch 20, bei dem die genannten absoluten Phasendaten und die genannten absoluten Stromsteuerdaten anzeigen, daß keine der genannten Phasen während der genannten zweiten vorbestimmten Erregungsperiode ($T_2$) erregt wird.

22. Schrittmotorregelsystem nach Anspruch 21, bei dem die genannte zweite vorbestimmte Erregungsperiode ($T_2$) so bestimmt wird, daß während der genannten Änderungspunktperiode ($T_A$) die Beschleunigungsenergie mit der Verzögerungsenergie des genannten Schrittmotors kompensiert wird.

23. Schrittmotor regelsystem nach Anspruch 20, 21 oder 22, bei dem die genannte erste Erregungsperiode ($T_1$) plus die genannte zweite vorbestimmte Erregungsperiode ($T_2$) im wesentlichen der genannten Änderungspunktperiode ($T_A$) gleich ist.

24. Schrittmotorregelsystem nach Anspruch 23, bei dem die genannte erste vorbestimmte Erregungsperiode ($T_1$) und die genannte vorbestimmte zweite Erregungsperiode ($T_2$) so bestimmt werden, daß die Geschwindigkeit und die Position des genannten Rotors am Ende der genannten Änderungspunktperiode ($T_A$) mit der erforderlichen Geschwindigkeit und der Position des genannten Rotors zu Beginn der genannten Verzögerungsperiode koinzidieren.

25. Schrittmotorregelsystem nach Anspruch 23 oder 24, bei dem die genannte vorbestimmte Erregungsperiode ($T_1$) und die genannte zweite vorbestimmte Erregungsperiode ($T_2$) so bestimmt werden, daß die Beschleunigungsenergie, die während eines Teils der genannten Änderungspunktperiode ($T_A$) erzeugt wird, mit der Verzögerungsenergie, die während des verbleibenden Teils der genannten Änderungspunktperiode ($T_A$) erzeugt wird, kompensiert wird.

26. Schrittmotorregelsystem nach Anspruch 23 oder 24, bei dem die genannte erste vorbestimmte Erregungsperiode ($T_1$) und die genannte zweite vorbestimmte Erregungsperiode ($T_2$) so bestimmt werden, daß die Beschleunigungsenergie, die während eines Teils der genannten Änderungspunktperiode ($T_A$) erzeugt wird, mit der Verzögerungsenergie, die während des verbleibenden Teils der genannten Änderungspunktperiode ($T_A$) erzeugt wird, plus der Reibungsenergie, die in dem genannten Schrittmotor während der genannten Änderungspunktperiode ($T_A$) verbraucht wird, kompensiert wird.

27. Schrittmotorregelsystem nach Anspruch 13 oder einem der Ansprüche 14 bis 26 in Verbindung mit Anspruch 13, bei welchem jeder der genannten vierten Sätze von vierten Steuerdaten ferner Verzögerungsphasendaten ($P_k'$) zur Bestimmung der nächsten Phase oder Phasen (A, B, C, D) umfaßt, die nach den genannten Verzögerungsperiode für einen der genannten Verzögerungsschritte erregt werden sollen, und Verzöge-

rungstromsteuerdaten ($C_k'$) zur Bestimmung des elektrischen Stroms, der der genannten nächsten Phase oder Phasen zugeführt werden soll, wodurch, in der Nachbarschaft einer Zielposition, bei der angehalten werden soll, eine Feinsteuerung der Verzögerung durch Verringerung des zur Erregung der Phase oder Phasen zugeführten Stroms bewirkt werden kann.

28. Schrittmotorregelsystem nach einem der Ansprüche 12 bis 27, bei dem das genannte Schrittmotorregelsystem angepaßt ist, um einen seriellen Drucker zu treiben, der ein Druckrad (81) hat, das mit dem genannten Schrittmotor (8) verbunden ist.

29. Schrittmotorregelsystem nach einem der Ansprüche 12 bis 27, bei welches das Schrittmotorregelsystem angepaßt ist, um einen seriellen Drucker anzutreiben, der einen Abstandsmechanismus (71) hat, der mit dem Schrittmotor (7) verbunden ist.

## Revendications

1. Procédé de commande de la rotation d'un moteur pas à pas (7, 8, 9) d'une amplitude voulue d'un mouvement ($S_t$), le moteur pas à pas comportant un rotor et plusieurs phases (A, B, C, D) et le rotor étant accouplé de manière à entraîner une pièce tournante (71, 81), ledit procédé consistant, dans le cas où l'amplitude voulue du mouvement est supérieure à une amplitude prédéterminée ($S_p$):

à accélérer la rotation dudit moteur pas à pas pendant une période d'accélération en fournissant au moteur pas à pas une série d'impulsions d'accélérations (1...m) jusqu'à ce qu'une vitesse de rotation (V) atteigne une vitesse de rotation prédéterminée ($V_c$),

à commander ledit moteur pas à pas pendant une période de vitesse constante à une vitesse constante égale à ladite vitesse de rotation prédéterminée ($V_c$), et

à ralentir la rotation dudit moteur pas à pas pendant une période de décélération depuis ladite vitesse de rotation prédéterminée ($V_c$) en fournissant audit moteur pas à pas une série d'impulsions de décélération (n'...1') de manière à arrêter ladite rotation à ladite amplitude voulue,

procédé caractérisé en ce qu'il consiste en outre dans le cas où ladite amplitude voulue du mouvement ($S_t$) est inférieure à ladite amplitude prédéterminée ($S_p$),

à accélérer la rotation du moteur pas à pas pendant une période d'accélération en fournissant audit moteur pas à pas une série d'impulsions d'accélération (1...A−1) jusqu'à ce que ladite vitesse de rotation (V) atteigne une vitesse de rotation donnée qui dépend de ladite amplitude voulue du mouvement ($S_t$),

à commander le moteur pas à pas pendant une période de point de changement ($T_A$) entre une accélération et une décélération en fonction de données de commande de point de changement, les données de commande de point de changement indiquant une première période d'excitation prédéterminée ($T_1$) pour exciter une première ou des premières phases du moteur pas à pas après la dernière ou les dernières phases excitées dans la période d'accélération et déterminer de manière à faire coïncider pratiquement la vitesse et la position dudit rotor à la fin de ladite période - de point de changement ($T_A$) avec la vitesse et la position requises dudit rotor au début d'une période de décélération suivante: et

à ralentir ladite rotation dudit moteur pas à pas pendant ladite période de décélération en lui fournissant une série d'impulsions de décélération (B'...1').

2. Procédé de commande selon la revendication 1, dans lequel ladite première période d'excitation prédéterminée ($T_1$) est pratiquement la même que ladite période de point de changement ($T_A$).

3. Procédé de commande selon la revendication 1 ou 2, dans lequel ladite première période d'excitation prédéterminée ($T_1$) est déterminée de manière à compenser l'énergie d'accélération développée pendant une partie de ladite première période d'excitation prédéterminée ($T_1$) avec l'énergie de décélération développée pendant la partie qui reste de ladite première période d'excitation prédéterminée ($T_1$).

4. Procédé de commande selon la revendication 1 ou 2, dans lequel ladite première période d'excitation prédéterminée ($T_1$) est déterminée de manière à compenser l'énergie d'accélération développée pendant une partie de ladite première période d'excitation prédéterminée ($T_1$) avec l'énergie de décélération développée pendant la partie qui reste de ladite première période d'excitation prédéterminée ($T_1$) augmentée de l'énergie de frottement consommée dans ledit moteur pas à pas pendant ladite période de point de changement ($T_A$).

5. Procédé de commande selon la revendication 1, ou la revendication 3 ou 4 annexées à la revendication 1, dans lequel la période de point de changement ($T_A$) comporte en outre une seconde période d'excitation prédéterminée ($T_2$).

6. Procédé de commande selon la revendication 5, dans lequel aucune desdites phase (A, B, C, D) n'est excitée pendant ladite second période d'excitation prédéterminée ($T_2$).

7. Procédé de commande selon la revendication 6, dans lequel ladite seconde période d'excitation prédéterminée ($T_2$) est déterminée de manière à compenser, pendant ladite période de point de changement ($T_A$) l'énergie d'accélération par l'énergie de décélération dudit moteur pas à pas.

8. Procédé de commande selon la revendication 5, 6 ou 7, dans lequel ladite première période d'excitation prédéterminée ($T_1$) augmentée de ladite seconde période d'excitation prédéterminée ($T_2$) est pratiquement égale à ladite période de point de changement ($T_A$).

9. Procédé de commande selon la revendication 8, dans lequel ladite première période d'excitation prédéterminée ($T_1$) et ladite seconde période d'excitation prédéterminée ($T_2$) sont déterminées de manière à faire coïncider la vitesse et la position dudit rotor à la fin de ladite période de point de changement ($T_A$) avec la vitesse et la position requises dudit rotor au début de ladite période de décélération.

10. Procédé de commande selon la revendication 8 ou 9, dans lequel ladite première période d'excitation prédéterminées ($T_1$) et ladite seconde période d'excitation prédéterminée ($T_2$) sont déterminées de manière à compenser l'énergie d'accélération développée pendant une partie de ladite période de point de changement ($T_A$) avec l'énergie de décélération développée pendant la partie qui reste de ladite période de point de changement ($T_A$).

11. Procédé de commande selon la revendication 8 ou 9, dans lequel ladite première période d'excitation prédéterminée ($T_1$) et ladite seconde période d'excitation prédéterminée ($T_2$) sont déterminées de manière à compenser l'énergie d'accélération développée pendant une partie de ladite période de point de changement ($T_A$) par l'énergie de décélération développée pendant la partie qui reste de ladite période de point de changement ($T_A$) augmentée de l'énergie de frottement consommée dans ledit moteur pas à pas pendant ladite période de point de changement ($T_A$).

12. Système de commande de moteur pas à pas destiné à faire tourner un moteur pas à pas (7, 8, 9) d'un mouvement d'une amplitude voulue ($S_t$), comportant:

un moteur pas à pas (7, 8, 9) comprenant un rotor accouplé avec une pièce tournante (71, 81) pour faire tourner ladite pièce tournante et plusieurs phases (A, B, C, D) et

un dispositif de commande (1, 2, 3, 4, 5, 6) couplé électriquement avec ledit moteur pas à pas et ayant pour fonction de fournir des pas d'impulsions au moteur pas à pas pour accélérer la relation du moteur pas à pas pendant une période d'accélération, pour entraîner le moteur pas à pas à une vitesse pratiquement constante pendant une période à vitesse constante lorsqu'elle est applicable et pour ralentir la rotation du moteur pas à pas dans une période de décélération,

ledit dispositif de commande comportant un processeur (1) et un dispositif de mémorisation ($ROM_2$, $ROM_3$, $ROM_4$) pour mémoriser des données de commande comprenant des données de commande pour la période d'accélération et des données de commande pour la période de décélération,

caractérisé en ce que lesdites données de commande mémorisées dans ledit dispositif de mémorisation comportent en outre des données de commande de point de changement utilisées pour commander le moteur pas à pas pendant une période de point de changement ($T_A$) et déterminer de manière à faire coincider pratiquement la vitesse et la position dudit rotor à la fin de la période de point de changement ($T_A$) avec la vitesse et la position voulues dudit rotor au début de la période de décélération et en ce que ledit processeur a pour fonction de commander ledit moteur pas à pas en fonction desdites données de commande comprenant les données de commande de point de changement quand ladite amplitude voulue du mouvement ($S_t$) est inférieure à ladite première valeur prédéterminée ($S_p$).

13. Système de commande de moteur pas à pas selon la revendication 12, dans lequel ledit dispositif de mémorisation comporte:

un premier dispositif de mémorisation ($ROM_2$), destiné à mémoriser plusieurs premiers ensembles de premières données de commande, chacun desdits premiers ensembles comprenant au moins un premier nombre de pas d'accélérations dudit moteur pas à pas, un second nombre de pas à vitesse constante dudit moteur pas à pas destinés à être utilisés quand ladite amplitude voulue du mouvement est supérieure à une première valeur prédéterminée ($S_p$), un troisième nombre de pas de décélération dudit moteur pas à pas et lesdites données de commande de point de changement utilisées quand ladite amplitude voulue du mouvement ($S_t$) est inférieure à ladite première valeur prédéterminée ($S_p$), l'un desdits premiers ensembles étant sélectionné en fonction de ladite amplitude voulue du mouvement de manière à déterminer les nombres nécessaires de pas d'accélération, de pas à vitesse constante et de pas de décélération,

un second dispositif de mémorisation ($ROM_3$) destiné à mémoriser plusieurs seconds ensembles de secondes données de commande, chacun desdits seconds ensembles comprenant au moins des premières données de temps ($t_j$) indiquant une période d'accélération pour l'un desdits pas d'accélération,

un troisième dispositif de mémorisation (23) destiné à mémoriser plusieurs troisièmes ensembles de troisièmes données de commande, chacun desdits troisièmes ensembles comprenant au moins des secondes données de temps ($t_c$) indiquant une période à vitesse constante pour l'un desdits pas à vitesse constante, et

un quatrième dispositif de mémorisation ($ROM_4$) destiné à mémoriser plusieurs quatrièmes ensembles de quatrièmes données de commande, chacun desdits quatrièmes ensembles comprenant au moins des troisièmes données de temps ($t'_k$) indiquant une période de décélération pour l'un desdits pas de décélération;

et dans lequel ledit processeur (1) a pour fonction de commander ledit moteur pas à pas en fonction de l'un sélectionné desdits premiers ensembles desdites premières données de commande correspondant à ladite amplitude voulue du mouvement, comprenant lesdites données de commande de point de changement lorsqu'elles sont applicables, l'un sélectionné desdits seconds ensembles de secondes données de commande, l'un sélectionné desdites troisièmes ensembles de troisièmes données de commande lorsqu'il est applicable et l'un sélectionné desdits quatrièmes ensembles de quatrièmes données de commande.

14. Système de commande de moteur pas à pas selon la revendication 12 ou 13, dans lequel lesdites données de commande de point de changement comprennent des premières données de temps indiquant une première période d'excitation prédéterminée ($T_1$) pour exciter la première ou les premières phase après la dernière ou les dernières phases excitées dans la période d'accélération.

15. Système de commande de moteur pas à pas selon la revendication 14, dans lequel ladite première période d'excitation prédéterminée ($T_1$) est pratiquement la même que ladite période de point de changement ($T_A$).

16. Système de commande de moteur pas à pas selon la revendication 14 ou 15, dans lequel ladite première période d'excitation prédéterminée ($T_1$) est déterminée de manière à faire coïncider pratiquement la vitesse et la position dudit rotor à la fin de ladite période de point de changement ($T_A$) avec la vitesse et la position voulues dudit rotor au début de ladite période de décélération.

17. Système de commande de moteur pas à pas selon la revendication 15 ou 16, dans lequel ladite première période d'excitation prédéterminée ($T_1$) est déterminée de manière à compenser l'énergie d'accélération developpée pendant une partie de ladite première période d'excitation prédéterminée ($T_1$) par l'énergie de décélération développée pendant la partie qui reste de ladite première période d'excitation prédéterminée ($T_1$).

18. Système de commande de moteur pas à pas selon la revendication 15 ou 16, dans lequel ladite première période d'excitation prédéterminée ($T_1$) est déterminée de manière à compenser l'énergie d'accélération développée pendant une partie de ladite première période d'excitation prédéterminée ($T_1$) par l'énergie de décélération développée pendant la partie qui reste de ladite première période d'excitation prédéterminée ($T_1$) augmentée de l'énergie de frottement consommée dans ledit moteur pas à pas pendant ladite période de point de changement ($T_A$).

19. Système de commande de moteur pas à pas selon l'une quelconque des revendications 14 à 18, dans lequel chacun desdits seconds ensembles de secondes données de commande comporte en outre des données de phase d'accélération ($P_j$) pour déterminer la phase ou les phases suivantes (A, B, C, D) à exciter après ladite période d'accélération pour l'un desdits pas d'accélération, et des données de commande de courant d'accélération ($C_j$) pour déterminer le courant électrique à fournir à ladite ou lesdites phases suivantes de manière que ladite première ou lesdites premières phases sont excitées pendant ladite première période d'excitation prédéterminée ($T_1$) soient déterminées par lesdites données de phase d'accélération dans le dernier desdits seconds ensembles correspondant au pas final de ladite période d'accélération et le courant électrique à fournir à ladite ou lesdites premières phases étant déterminés par lesdites données de commande de courant d'accélération dans le dernier desdits seconds ensembles correspondant au pas final de ladite période d'accélération.

20. Système de commande de moteur pas à pas selon la revendication 19, dans lequel ladite première période d'excitation prédéterminée ($T_1$) est inférieure à ladite période de point de changement ($T_A$) et lesdites données de commande de point de changement comprenant en outre des secondes données de temps indiquant une seconde période d'excitation prédéterminée ($T_2$) pour exciter l'une absolue de ladite ou lesdites phases (A, B, C, D) après ladite première période prédéterminée ($T_1$), des données de phase absolues ($P_{ab}$) indiquant la phase ou les phases absolues à exciter après ladite première période d'excitation prédéterminée ($T_1$) et à l'intérieur de ladite période de point de changement ($T_A$) et des données de commande de courant absolu ($C_{ab}$) indiquant le courant électrique à fournir à ladite ou lesdites phases absolues.

21. Système de commande de moteur pas à pas selon la revendication 20, dans lequel lesdites données de phase absolue et lesdites données de commande de courant absolu indiquent qu'aucune desdites phases n'est excitée pendant ladite seconde période d'excitation prédéterminée ($T_2$).

22. Système de commande de moteur pas à pas selon la revendication 21, dans lequel ladite seconde période d'excitation prédéterminée ($T_2$) est déterminée de manière à compenser, pendant ladite période de point de changement ($T_A$), l'énergie d'accélération par l'énergie de décélération dudit moteur pas à pas.

23. Système de commande de moteur pas à pas selon la revendication (20, 21 ou 22) dans lequel ladite première période d'excitation prédéterminée ($T_1$) augmentée de ladite seconde période d'excitation prédéterminée ($T_2$) est pratiquement égale à ladite période de point de changement ($T_A$).

24. Système de commande de moteur pas à pas selon la revendication 23, dans lequel ladite première période d'excitation prédéterminée ($T_1$) et ladite seconde période d'excitation prédéterminée ($T_2$) sont déterminées de manière à faire coïncider la vitesse et la position dudit rotor à la fin de ladite période de point de changement ($T_A$) avec la vitesse et la position voulues dudit rotor au début de ladite période de décélération.

25. Système de commande de moteur pas à pas selon la revendication 23 ou 24, dans lequel ladite première période d'excitation prédéterminée ($T_1$) et ladite seconde période d'excitation prédéterminée ($T_2$) sont déterminées de manière à compenser l'énergie d'accélération développée pendant une partie de ladite période de point de changement ($T_A$) par l'énergie de décélération développée pendant la partie qui reste de ladite période de point de changement ($T_A$).

26. Système de commande de moteur pas à pas selon la revendication 23 ou 24, dans lequel ladite première période d'excitation prédéterminée ($T_1$) et ladite seconde période d'excitation prédéterminée ($T_2$) sont déterminées de manière à compenser l'énergie d'accélération développée pendant une partie de ladite période de point de changement ($T_A$) par l'énergie de décélération développée pendant la partie qui reste de ladite période de point de changement ($T_A$) augmentée par l'énergie de frottement consommée dans ledit moteur pas à pas pendant ladite période de point de changement ($T_A$).

27. Système de commande de moteur pas à pas selon la revendication 13 ou l'une quelconque des revendications 14 à 26 annexées à la revendication 13, dans lequel chacun desdits quatrièmes ensembles de quatrièmes données de commande comporte en outre des données de phase de décélération ($P_{k'}$) pour déterminer la phase ou les phases suivantes (A, B, C, D) à exciter aprés ladite période de décélération pour l'un desdits pas de décélération et des données de commande de courant de décélération ($C_{k'}$) pour déterminer le courant électrique à fournir à ladite ou lesdites phases suivantes de manière qu'au voisinage de la position voulue d'arrêt, un contrôle précis de décélération puisse être effectué en diminuant le courant fourni à la ou les phases excitées.

28. Système de commande de moteur pas à pas selon l'une quelconque des revendications 12 à 27, dans lequel ledit système de commande de moteur pas à pas est agencé pour entraîner une imprimante en série comprenant une roue des types (81) accouplée avec ledit moteur pas à pas (8).

29. Système de commande de moteur pas à pas selon l'une quelconque des revendications 12 à 27, dans lequel ledit système de commande de moteur pas à pas est agencé pour entraîner une imprimante en série comprenant un mécanisme d'espacement (71) accouplé avec ledit moteur pas à pas (7).

# Fig. 1

# Fig. 2

## Fig. 3A

## Fig. 3B

# Fig. 4

# Fig. 5

# Fig. 6

START

DESIGNATE STEP NUMBER X

DETERMINE THE STEP NUMBER A FOR ACC. AND THE STEP NUMBER B FOR DEC.

ENERGIZE THE ACC. PHASE

(A-1) TH ? → NO

YES

MAX ? → YES

B → NO

ENERGIZE BY DATA READ FROM THE CHANGE POINT DATA TABLE

1

① ENERGIZE DEC. PHASE FOR B STEPS

NO ← B TH ?

YES

E N D

Ⓐ ENERGIZE THE ACC. PHASE BY A STEP DATA

ENERGIZE BY CONT. VELOCITY DATA

NO ← B STEP REMAIN ?

YES

5

0 112 730

*Fig. 7A*

ACC ——— DEC

ACC FORCE

DCC FORCE

$d_{A-5}$  $d_{A-4}$  $d_{A-3}$  $d_{A-2}$  $d_{A-1}$  B  $T_{OFF}$  C  D  A ---- C  D

A  B  C  D  A  $T_{ON}$

t

$t_1$  $t_{A-5}$  $t_{A-4}$  $t_{A-3}$  $t_{A-2}$  $t_{A-1}$  $T_A$  $t_B'$  $t_{B-1}'$  $t_{B-2}'$  ---- $t_2'$  $t_1'$  $T_E$

$T_1$  $T_2$  $a_B$  $a_{B-1}$

*Fig. 7B*

A —— ON —— OFF —— C

$t_{A-2}$  $t_{A-1}$  $T_A$

$T_{OFF\,1}$

$T_{ON\,1}$

$T_{ON\,2}$

$T_{A\,1}$

## Fig. 8A

| Fig. 8 |
|--------|
| Fig. 8A |
| Fig. 8B |

START

12

B ──PC or SC──>

CPU ①

SPACE MOTOR
DRIVE ROUTINE ⑧ ──N── PRINT CODE ?

Y

② PC → ($P_i$, $H_i$)

ROM₁ ~ 200

| $P_0$ | $H_0$ |
|-------|-------|
| $P_1$ | $H_1$ |
| ⋮ | ⋮ |
| $P_{n-1}$ | $H_{n-1}$ |
| $P_n$ | $H_n$ |

PRINT CODE

R A M ~ 3

31 ~ TARGET POSITION REG.

32 ~ HAMMER STRENGTH REG.

33 ~ EXISTING POSITION REG.

34 ~ AMOUNT OF MOVEMENT (AM) REG.

③ CALCULATE AMOUNT OF MOVEMENT

④ EXTRACT CONTROL DATA BASED ON AMOUNT OF MOVEMENT

ROM₂

PW CONTROL TABLE ~ 250

Fig. 8B

## *Fig. 9*

<u>ROM 2</u>

PW CONTROL TABLE

| TOTAL STEPS | DATA | CHANGE POINT CONTROL DATA |
|---|---|---|
| $i$ <br> $(i=1,2,\cdots$ <br> ,or 96) | ACC STEPS | |
| | DEC STEPS | |
| | FIRST TIME DATA $t_{c1}$ | |
| | FIRST PHASE CONTROL DATA <br> (PHASE DATA $P_{c1}$ & CURRENT CONTROL DATA $C_{c1}$) | |
| | ABSOLUTE PHASE CONTROL DATA <br> (PHASE DATA $P_{ab}$ & CURRENT CONTROL DATA $C_{ab}$) | |
| | SECOND TIME DATA $t_{c2}$ | |
| | SECOND PHASE CONTROL DATA <br> (PHASE DATA $P_{c2}$ & CURRENT CONTROL DATA $C_{c2}$) | |

# Fig. 10

ROM₃

ACC TABLE

| ADDRESS | DATA |
|---------|------|
| $A_j$ <br> $(j = 1, 2, \cdots$ <br> $\cdots )$ | TIME DATA $t_j$ (2 BYTES) |
| | PHASE DATA $P_j$ (2 BITS) |
| | CURRENT CONTROL DATA $C_j$ (3 BITS) |

# Fig. 11

ROM₄

| ADDRESS | DATA |
|---------|------|
| $A_k$ <br> $(k = \cdots 3, 2,$ <br> $1 )$ | TIME DATA $t'_k$ (2 BYTES) |
| | PHASE DATA $P'_k$ (2 BITS) |
| | CURRENT CONTROL DATA $C'_k$ (3 BITS) |

## Fig. 12A

EXTRACTION OF CONTROL DATA

```
34 ─ A.M. REG.          ① READ A.M. REG. ──→ DIRECTION    341
                                               REG.

       ▽5                                                   ▽2

351 ─ ACC  START                            250
       ADD. REG.    ◄──┐    ② READ ROM₂ ◄── ROM₂
                        │                    (ACC STEPS)
       ▽1              │
35 ─ ACC  FINAL        │
       ADD. REG.   ◄──┘

       ▽10

37 ─ DEC  START                            250
       ADD. REG.   ◄──┐    ③ READ ROM₂ ◄── ROM₃
                        │                    (DEC STEPS)
       ▽11             │
371 ─ DEC  FINAL       │
       ADD. REG.   ◄──┘

     SELECTED ADD.  ◄──────  ④ SET SELECTED
38 ─ IN ROM₂ REG.              ADD. IN ROM₂
            ▽6                      ▽1
```

# Fig. I2 B

START CONTROL

```
                                    ⧨1

         391                              ①
    ┌──────────────┐        ┌──────────────────────┐
    │  P AND C     │        │ READ DIRECTION REG.  │
    │  REG.        │════════│ P AND C REG., AND    │
    └──────────────┘        │ EXISTING PHASE REG.  │
         ▽3                 └──────────────────────┘
                                      │      ②
                            ┌──────────────────────┐
                            │ CALCULATE THE NEXT   │
                            │ PHASE AND CURRENT    │
                            └──────────────────────┘
                                      │      ③
                            ┌──────────────────────┐
         ▽9                 │ SET THE CALCULATED   │
                            │ PHASE AND CURRENT    │
         39                 │ CONTROL DATA INTO    │──────┐
    ┌──────────────┐        │ PCB                  │      ▽7
    │EXISTING PHASE│        └──────────────────────┘
    │REG.          │                  │      ④
    └──────────────┘        ┌──────────────────────┐
         ▽4                 │ SET THE CALCULATED   │
                            │ PHASE DATA INTO      │
                            │ EXISTING PHASE REG.  │
                            └──────────────────────┘
                                      │      ⑤
                            ┌──────────────────────┐
                            │ SET A SHORT TIME     │
                            │ DATA ts INTO TIMER   │──────┐
                            └──────────────────────┘      ▽8
                                      │
                         N   ◇────────────────◇  ⑥
                          ───│   TIME  UP ?    │
                             ◇────────────────◇
                                      │Y
                                     ⧨2
```

0 112 730

# Fig.12C-1

ACC CONTROL

Fig.12C

| Fig.12C-1 |
| Fig.12C-2 |

② (entry)

① READ ACC START ADD. REG.

② READ tj FROM ROM₃ — ROM₃ (TIME DATA)

③ SET tj INTO TIMER — ▽8

④ READ Pᵢ AND Cᵢ FROM ROM₃ — ROM₃ (Pᵢ AND Cᵢ)

⑤ READ DIRECTION REG., P AND C REG., AND EXISTING PHASE REG.

⑥ CALCULATE THE NEXT PHASE DATA AND CURRENT CONTROL DATA

③

13

# Fig. 12C-2

③

⑦
SET THE CALCULATED PHASE
AND CURRENT CONTROL DATA
INTO PCB

▽7

⑧
SET THE CALCULATED
PHASE DATA INTO
EXISTING PHASE REG.

▽9

⑨
N ◇ TIME UP ?

Y

⑩
INCREMENT ACC
START ADD. REG.

▽5

⑪
N ◇ ACC FINAL ?

②

Y

④

# Fig. 12D-1

CHANGE POINT CONTROL (PART I)

Fig. 12D

| Fig. 12D-1 |
|------------|
| Fig. 12D-2 |

④

⑥

① READ SELECTED
ADD. IN $ROM_2$ REG.

② READ $t_{c1}$ FROM
$ROM_2$

$ROM_2$
$\begin{pmatrix} \text{FIRST TIME} \\ \text{DATA } t_{c1} \end{pmatrix}$

③ SET $t_{c1}$ INTO
TIMER

⑧

④ READ $P_{c1}$ & $C_{c1}$
FROM $ROM_2$

$ROM_2$
$(P_{c1}$ & $C_{c1})$

⑤ READ DIRECTION REG.
P AND C REG., AND EXISTING
PHASE REG.,

⑥ CALCULATE THE NEXT PHASE
DATA AND CURRENT CONTROL
DATA

⑤

# Fig. 12D-2

SET THE CALCULATED PHASE
DATA INTO EXISTING PHASE
REG.

⑦

⑨

READ Pab & Cab
FROM ROM₂

⑧

ROM₂
(Pab & Cab)

SET Pab & Cab
INTO PCB

⑨

TIME UP ?

⑩

N

Y

5

6

16

0 112 730

# Fig. 12E-1

CHANGE POINT CONTROL (PART Ⅱ)

Fig. 12E

| Fig. 12E-1 |
|---|
| Fig. 12E-2 |

⑥

① READ SELECTED ADD
IN $ROM_2$ REG.

② READ $t_{c2}$
FROM $ROM_2$ ——— $ROM_2$ SECOND TIME DATA $t_{c2}$

③ SET $t_{c2}$
INTO TIMER

⑧

④ READ $P_{c2}$ & $C_{c2}$
FROM $ROM_2$ ——— $ROM_2$ ($P_{c2}$ & $C_{c2}$)

② ③ ④

⑤ READ DIRECTION OF CHANGED
PHASE REG., P AND C REG.,
AND CURRENT PHASE REG.

⑥ CALCULATE THE NEXT PHASE
DATA AND
CURRENT CONTROL DATA

⑦

17

# Fig. 12E-2

⑦

⑦ SET THE CALCULATED PHASE
AND CURRENT CONTROL DATA
INTO PCB

⑦

⑧ SET THE CALCULATED
PHASE DATA INTO EXISTING
PHASE REG.

N ⑨ TIME UP ?

Y

7

## *Fig. 12F-1*

### DEC CONTROL

Fig. 12F

| Fig. 12F-1 |
|---|
| Fig. 12F-2 |

# Fig. 12F-2

⑨

⑦ SET THE CALCULATED PHASE AND CURRENT CONTROL DATA INTO P C B

▽7

⑧ SET THE CALCULATED PHASE DATA INTO CURRENT PHASE REG.

▽9

⑨ TIME UP? — N

Y

⑩ DECREMENT DEC START ADD. REG.

▽10

⑪ DEC FINAL? — N

▽7

Y

⑫ SET A STOP TIME DATA INTO TIMER

⑬ TIME UP ? — N

Y

E N D

20

Fig.13

| Fig.13A |
| --- |
| Fig.13B |

*Fig. 13 A*

5 (DV₂)

*Fig. 13B*

0 112 730

## Fig. 14

## Fig. 15